# EUROPEAN PATENT SPECIFICATION

(11) **EP 4 271 560 B1**
(45) Date of publication and mention of the grant of the patent: **20.11.2024**
(21) Application number: 21854824.6
(22) Date of filing: 28.12.2021
(51) Int. Cl.: B29D 30/00, B29D 30/30, B65H 49/18, B65H 54/02, B65H 55/00

(54) **METHOD FOR PROVIDING ELONGATED ELEMENTS TO BE USED IN A PROCESS FOR BUILDING TYRES FOR VEHICLE WHEELS AND PLANT FOR BUILDING TYRES FOR VEHICLE WHEELS**
VERFAHREN ZUR BEREITSTELLUNG VON LÄNGLICHEN ELEMENTEN ZUR VERWEDNUNG IN EINEM PROZESS ZUR HERSTELLUNG VON REIFEN UND ANLAGE ZUR HERSTELLUNG VON REIFEN FÜR FAHRZEUGRÄDER
PROCÉDÉ DE FOURNITURE DES ÉLÉMENTS ALLONGÉS POUR L'UTILISATION DANS UN PROCÉDÉ DES FABRICATION DE PNEUMATIQUES ET INSTALLATION DE FABRICATION DE PNEUMATIQUES POUR ROUES DE VÉHICULES

(30) Priority: 29.12.2020 IT 202000032555
(43) Date of publication of application: 08.11.2023
(73) Proprietor: Pirelli Tyre S.p.A., 20126 Milano (IT)
(72) Inventor: ANFOSSI, Andrea, 20126 Milano (IT); BASILICO, Roger, 20126 Milano (IT); SIMONATO, Giovanni, 20126 Milano (IT); FLYNN, Conor, 20126 Milano (IT)
(74) Representative: Porta & Consulenti Associati S.p.A.
(86) International application number: PCT/IB2021/062369
(87) International publication number: WO 2022/144760

(56) References cited:
- EP-A2- 1 629 964
- WO-A1-2011/101738
- WO-A1-2014/011033
- WO-A1-2015/097578
- WO-A1-2016/103077
- JP-A- H10 296 875

## Description

The present invention relates to a process and a plant for building tyres of vehicle wheels and method for arranging elongated elements to be used in said process.

A tyre for vehicle wheels generally comprises a carcass structure, a crown structure arranged in radially outer position with respect to the carcass structure and a pair of sidewalls that represent the axially outer surfaces of the tyre, with respect to a mid-plane perpendicular to the rotation axis of said tyre.

The carcass structure comprises at least one carcass ply formed from reinforcing cords incorporated in a matrix of elastomeric material. The carcass ply has opposite end flaps respectively engaged with annular anchoring structures. The latter are arranged in the areas of the tyre usually identified with the name "beads" and are normally each formed by a substantially circumferential annular insert called "bead core" on which at least one filling insert is applied, in radially outer position, tapering radially going away from the rotation axis.

At the beads specific reinforcing structures may be provided having the function of improving the transmission of torque to the tyre.

In the case of "tubeless" tyres, i.e. without an air chamber, a layer of elastomeric material, generally known as "liner", may also be provided in radially inner position with respect to the carcass structure to provide the necessary impermeability to the inflation air of the tyre. Generally, the liner extends from one bead to the other.

The crown structure comprises a belt structure and, in radially outer position with respect to the belt structure, a tread band made of elastomeric material.

The belt structure comprises one or more belt layers arranged radially juxtaposed over one another, having textile or metal reinforcing cords having orientation substantially parallel to the direction of circumferential extension of the tyre (zero degrees layer) and/or having crossed orientation.

Between the carcass structure and the belt structure it is possible to provide a layer of elastomeric material, called "under-belt", having the function of making the radially outer surface of the carcass structure as uniform as possible for the subsequent application of the belt structure.

Longitudinal and transversal grooves are typically shaped on the tread band, arranged to define a desired tread pattern. Between the tread band and the belt structure it is possible to arrange a so-called "under-layer" made of elastomeric material of suitable properties for obtaining a stable bond of the belt structure with the tread band itself.

The sidewalls are made of elastomeric material and represent the axially outer surfaces with respect to the annular anchoring structures, to the carcass ply(-ies), to the belt layer(s) and possibly to at least one portion of tread band. For example, the sidewalls each extend from one of the side edges of the tread band up to the respective annular anchoring structure to the beads.

The sidewalls are intended to protect the carcass structure from atmospheric agents and lateral impacts (for example against curbs). In self-supporting tyres, suitable sidewall inserts are suitable for giving the tyre sufficient strength to adequately withstand the load of the vehicle when the tyre is used in a deflated state and for giving favourable properties of comfort when, on the other hand, the tyre is in normally-inflated operating conditions. A sidewall insert made of elastomeric material is preferably arranged in axially outer position with respect to the liner and in axially inner position with respect to each sidewall to define a structure suitable for adequately supporting the tyre in the deflated state, stopping the sidewall from yielding or bulging on itself, without compromising the normal travel conditions.

The term "elastomeric material" is meant to indicate a composition comprising at least one elastomeric polymer and at least one reinforcing filler. Preferably, such a composition also comprises additives like, for example, a cross-linking agent and/or a plasticizer. Thanks to the presence of the cross-linking agent, such a material can be cross-linked through heating, so as to form the end product.

The term "elongated element" is meant to indicate an element made of elastomeric material having predominant extension along a longitudinal direction thereof. Such an elongated element preferably consists of only elastomeric material.

The term "base surface" of the elongated element is meant to indicate the radially inner surface of each coil of elongated element when it is wound on a storage reel. Such a base surface corresponds to the lower surface of the elongated element once unwound from the storage reel and arranged on a substantially horizontal plane.

The term "elongated elements that are the same as each other" is meant to indicate elongated elements that have the same composition and geometry. Two elongated elements that are the same as each other consist of a same elastomeric material, have the same shape along a cross section perpendicular to the longitudinal direction of main extension and have the same dimensions along such a cross section. Two elongated elements that are the same as each other also have the same elongation in the longitudinal direction, or in any case such that the elongation of a first elongated element is comprised between 99% and 101% of the elongation of a second elongated element when subjected to a same load in the longitudinal direction.

The term "elongated elements that are different from each other" is meant to indicate elongated elements that have different composition and/or geometry, in which, in combination or alternatively, the elastomeric materials are different in composition, the respective shapes along a cross section perpendicular to the longitudinal direction of main extension are different from each other, such sections have different dimensions. Two elongated elements that are different from each other can also have the same elongation in the longitudinal direction, or in any case such that the elongation of a first elongated element is comprised between 99% and 101% of the elongation of a second elongated element when subjected to a same load in the longitudinal direction, or they can have a different elongation in the longitudinal direction such that the elongation of a first elongated element is less than 99% or greater than 101% of the elongation of a second elongated element, when subjected to a same load in the longitudinal direction.

The term "structural component" of a tyre is meant to indicate any portion thereof capable of carrying out its function or a part thereof. Examples of structural components of the tyre are the following: the carcass structure, the crown structure, or parts thereof, like liner, under-liner, anti-abrasive inserts, bead core, filling inserts in the area of the bead (and therefore the annular anchoring structures defined by bead cores and respective filling inserts), carcass ply(-ies), belt layer(s), belt under-layer, under-layer of the tread band, sidewalls, sidewall inserts, tread band, textile or metal reinforcements, reinforcing elements made of elastomeric material etc., or a part thereof.

The term "service fabric" or "service component" is meant to indicate a fabric associated with an elongated element arranged to prevent coils of elongated element wound on a winding support from sticking together. Preferably, said service fabric is also configured to give the elongated element a desired structural consistency when it is wound on a winding support.

The term "self-supporting tyre" is meant to indicate a tyre that differs from a standard tyre in that it is capable of supporting the load of the vehicle under a considerable or total loss of pressure, for example when there is a puncture, allowing the driver to travel, for a certain distance, to reach a repair shop without having to stop to change the tyre in a potentially dangerous situation.

The term "winding in parallel" of two elongated elements is meant to indicate a simultaneous winding of a pair of elongated elements on one or more winding supports.

The term "winding diameter" of an elongated element on a storage reel or on a winding support is meant to indicate the distance between the rotation axis of the storage reel or of the winding support and the point of the elongated element still wound on the storage reel or on the winding support and radially farthest from said rotation axis.

The terms "axial", "axially", "radial", "radially", "circumferential" and "circumferentially" are used with reference to winding supports used in the tyre building process.

In particular, the terms "axial" and "axially" are meant as references/sizes arranged/measured or extending in a substantially parallel direction to a geometric rotation axis of the winding supports.

The terms "radial" and "radially" are meant as references/sizes arranged/measured or extending in a substantially perpendicular direction to a geometric rotation axis of the winding supports and lying in a plane comprising such a geometric rotation axis.

The terms "radially inner/outer" are meant to indicate respectively a position closer to or further away from said geometric rotation axis of the winding supports.

The terms "axially inner/outer" are meant to indicate respectively a position closer to or further away from a mid-plane perpendicular to the geometric rotation axis of the winding supports.

The terms "circumferential" and "circumferentially" are meant as references/sizes arranged/measured or extending along a circumference that extends around the geometric rotation axis of the winding supports.

A tyre for vehicle wheels comprises a plurality of structural components made of elastomeric material. Non-limiting examples of these include: the tread band, the sidewalls, the sidewall inserts, the so-called under-belt and/or under-layer layers, the liner, the annular reinforcing inserts and others.

In production processes of tyres for vehicle wheels at least some of such structural components are made from elongated elements that are wound, in a building line, on a forming drum.

Document WO2015097578 discloses a method for managing elongate elements in a plant for building tyres. Document WO2011101738 discloses a process for building tyres for vehicle wheels by feeding to at least one work station an elongated element provided with two service fabrics. Document WO2016103077 discloses a plant for collecting or dispensing an elongated element for building tyres.

In the Applicant's experience, at least for some types of tyres there is simultaneous deposition on the forming drum of two elongated elements that are the same as each other. An example of such elongated elements deposited simultaneously on the forming drum is a pair of elongated elements that, during the building of a self-supporting tyre, are deposited axially spaced apart on the forming drum, before or after the deposition of one or more carcass plies, to make a respective pair of sidewall inserts of the self-supporting tyre.

The Applicant has observed that in order to simultaneously deposit two elongated elements that are the same as each other on a forming drum, a process is currently provided in which two elongated elements of a same elastomeric material are drawn simultaneously from a single extrusion device.

As the elongated elements progressively come out from the extrusion device, they are deposited on a storage reel positioned in the extrusion line substantially downstream of the extrusion device. The deposition of the elongated elements is performed by winding the elongated elements in coils on the storage reel, simultaneously making two pluralities of coils axially adjacent to one another and spaced apart on the storage reel. During the winding on the storage reel, the base surfaces of the elongated elements are coupled with a service fabric that avoids direct contact between the coils of a same elongated element preventing them from sticking together. The service fabric is unwound from a service reel during the coupling with the elongated elements.

The storage reel with both of the elongated elements that are the same as each other wound is then moved and housed in a storage and, when it is needed, it is taken from the storage and arranged in a building line close to the forming drum.

In the building line, both of the elongated elements that are the same as each other are simultaneously unwound from the storage reel and simultaneously deposited on the forming drum to simultaneously make the desired pair of structural components made of elastomeric material. During the unwinding of the elongated elements, the service fabric is separated from the base surface of the elongated elements and wound on a service reel.

The Applicant has tackled the problem of building tyres in which the two elongated elements simultaneously deposited on the forming drum are different from each other. Such a requirement could for example be needed, in the Applicant's experience, during the building of a self-supporting tyre in which the sidewall insert of one side of the tyre is different from the sidewall insert of the other side of the tyre.

The Applicant has observed that it would not be possible to simultaneously deposit two elongated elements that are different from each other on the forming drum by actuating the process described above, since each storage reel comprises two elongated elements that are the same as each other.

The Applicant has however felt the need to simultaneously deposit two elongated elements that are different from each other on the forming drum without having to redesign or modify the extrusion line and/or the building line.

The Applicant has indeed realized that this would allow using pre-existing production plants, avoiding costs of redesigning, prototyping and production of new extrusion lines and new building lines. This would also allow avoiding to provide new production spaces to house new production plants in addition to those already existing.

The Applicant has observed that in order to use the same pre-existing building lines the building lines should be provided with storage reels already configured to simultaneously deposit two elongated elements that are different from each other on the forming drum.

The Applicant has however noted that in order to use the same pre-existing extrusion lines, every extruder device should continue both to simultaneously extrude respective elongated elements that are the same as each other, and to wind in parallel each pair of elongated elements extruded on a respective storage reel.

The Applicant has realized that it would be possible to provide, between the extrusion line and the storage or between the storage and the building line, a movement of at least some of the elongated elements wound on the storage reels, so as to change the arrangement of the elongated elements on the storage reels exiting from the extrusion line with respect to that on the storage reels entering the building line.

The Applicant has perceived that in order for such a change of the arrangement of the elongated elements on the storage reels not to result in any change of the operations carried out in the extrusion line and in the building line, it would be necessary to:
- start from a first pair of elongated elements that are the same as each other, extruded simultaneously by an extruder device and wound on a first initial reel and from a second pair of elongated elements that are the same as each other but different from the elongated elements of the first pair of elongated elements, extruded simultaneously by the extruder device and wound on a second initial reel;
- end up with a first pair of elongated elements that are different from each other wound on a first final reel and with a second pair of elongated elements that are different from each other wound on a second final reel.

The present invention therefore relates, in a first aspect thereof, to a method for arranging elongated elements to be used in a process for building tyres for vehicle wheels according to claim 1.

The Applicant deems that such a method allows to use the pre-existing extrusion lines in a plant configured to extrude pairs of elongated elements that are the same as each other also in a process in which two elongated elements that are different from each other are deposited simultaneously on the forming drum. The Applicant has indeed verified that winding in parallel of first and second elongated elements that are the same as each other of a first type on a first initial winding support and winding in parallel of third and fourth elongated elements that are the same as each other of a second type different from the first type on a second initial winding support may be carried out in an extrusion line comprising an extruder device from which elongated elements that are the same as each other obtained from a same elastomeric material are simultaneously extruded. The Applicant has verified that the extruder device may, in a first step, be used to extrude the first type of elongated elements that are the same as each other and, after a change of elastomeric material to be extruded, may subsequently be used to extrude the second type of elongated elements that are the same as each other. The Applicant has also verified that it is possible to use two extruder devices each of which is configured to extrude pairs of elongated elements of one of the two types of elongated elements.

The Applicant also deems that such a method allows to use the pre-existing building lines configured to allow two elongated elements that are the same as each other to be wound simultaneously on a forming drum. The Applicant has indeed verified that the final winding supports are capable of simultaneously unwinding two elongated elements that are different from each other allowing the simultaneous winding on the forming drum of two elongated elements that are different from each other.

The Applicant also deems that such a method allows to use the pre-existing storages, since they are already configured to store winding supports with wound elongated elements.

In a second aspect thereof, the invention relates to a process for building tyres for vehicle wheels according to claim 13.

The Applicant deems that, in this way, it is possible to simultaneously deposit pairs of elongated elements that are different from each other on a forming drum without having to change the existing building lines.

In a third aspect thereof, the invention relates to a plant for building tyres for vehicle wheels according to claim 14.

In at least one of said aspects, the present invention may have at least one of the preferred features described hereinafter.

Preferably, unwinding the first elongated element from the first initial winding support is performed simultaneously with unwinding the third elongated element from the second initial winding support.

The Applicant has found that in this way the first and the third elongated element are simultaneously made available for winding on the first final winding support.

Preferably, winding the first elongated element on the first final winding support is performed simultaneously with winding the third elongated element on the first final winding support.

The simultaneous unwinding of the first elongated element and of the third elongated element from the respective initial winding supports and their simultaneous winding on the first final winding support allows direct transfer of the first and third elongated element from the respective initial winding support to the first final winding support. In this way, it is not necessary to have winding supports or other intermediate storage devices for the first and third elongated element during the transfer from the respective initial winding supports to the first final winding support.

Preferably, winding the first elongated element on the first final winding support comprises picking up the first elongated element directly from the first initial winding support.

Preferably, winding the third elongated element on the first final winding support comprises picking up the third elongated element directly from the second initial winding support.

Preferably, winding the first elongated element on the first final winding support is carried out during the unwinding of the first elongated element from the first initial winding support.

Preferably, winding the third elongated element on the first final winding support is carried out during the unwinding of the third elongated element from the second initial winding support.

Preferably, unwinding the second elongated element from the first initial winding support is performed simultaneously with unwinding the fourth elongated element from the second initial winding support.

The Applicant deems that in this way the second and fourth elongated elements are simultaneously made available for winding on the second final winding support.

Preferably, winding the second elongated element on the second final winding support is performed simultaneously with winding the fourth elongated element on the second final winding support.

The simultaneous unwinding of the second elongated element and of the fourth elongated element from the respective initial winding supports and their simultaneous winding on the second final winding support allows direct transfer of the second and fourth elongated element from the respective initial winding support to the second final winding support. In this way, it is not necessary to have winding supports or other intermediate storage devices for the second and fourth elongated element during the transfer from the respective initial winding supports to the second final winding support.

Preferably, winding the second elongated element on the second final winding support comprises picking up the second elongated element directly from the first initial winding support.

Preferably, winding the fourth elongated element on the second final winding support comprises picking up the fourth elongated element directly from the second initial winding support.

Preferably, winding the second elongated element on the second final winding support is carried out during the unwinding of the second elongated element from the first initial winding support.

Preferably, winding the fourth elongated element on the second final winding support is carried out during the unwinding of the fourth elongated element from the second initial winding support.

Preferably, unwinding the first elongated element from the first initial winding support is performed simultaneously with unwinding the second elongated element from the first initial winding support.

Preferably, unwinding the third elongated element from the second initial winding support is performed simultaneously with unwinding the fourth elongated element from the second initial winding support.

In this way, all of the elongated elements are simultaneously made available for winding on the first and second final winding support.

Preferably, winding the first elongated element on the first final winding support is performed simultaneously with winding the second elongated element on the second final winding support.

Preferably, winding the third elongated element on the first final winding support is performed simultaneously with winding the fourth elongated element on the second final winding support.

In this way, all of the elongated elements can be directly transferred from the respective initial winding supports to the respective final winding supports.

Preferably, winding the first elongated element and the second elongated element in parallel comprises associating a first initial service component with the first elongated element and with the second elongated element.

This activity is preferably carried out in the initial winding station.

The first initial service component is preferably associated with a base surface of the first elongated element and of the second elongated element. The service components give the elongated elements a desired structural consistency, thus preventing the elongated elements from being deformed during the winding or unwinding from a winding support. The service components also avoid direct contact of elastomeric material when the elongated elements are wound in coils.

Preferably, the first initial service component is unwound from a first auxiliary winding support.

Preferably, the unwinding of the first initial service component from the first auxiliary winding support is performed simultaneously with the winding in parallel of the first and second elongated element on the first initial winding support.

Preferably, the winding of the first elongated element on the first initial winding support is performed as a result of a pulling action exerted by the first initial service component after the coupling thereof with the first elongated element.

Preferably, the winding of the second elongated element on the first initial winding support is performed as a result of a pulling action exerted by the first initial service component after the coupling thereof with the second elongated element.

Preferably, unwinding the first elongated element from the first initial winding support comprises removing said first initial service component from the first elongated element.

This activity is preferably carried out in a first intermediate unwinding station.

Preferably, unwinding the second elongated element from the first initial winding support comprises removing said first initial service component from the second elongated element.

This activity is also preferably carried out in the first intermediate unwinding station.

Preferably, the unwinding of the first elongated element from the first initial winding support is performed as a result of a pulling action exerted by the first initial service component.

Preferably, the unwinding of the second elongated element from the first initial winding support is performed as a result of a pulling action exerted by the first initial service component.

Preferably, the first initial service component removed from the first elongated element is collected on a first collection winding support.

Preferably, the first initial service component removed from the second elongated element is collected on a first collection winding support.

Preferably, the first collection winding support is structurally the same as the first auxiliary winding support.

Preferably, the removal and the collection of said first initial service component is performed during the unwinding of the first elongated element from the first initial winding support.

Preferably, winding the third elongated element and the fourth elongated element in parallel comprises associating a second initial service component with the third elongated element and with the fourth elongated element.

This activity is preferably carried out in the initial winding station.

Preferably, the second initial service component is unwound from a second auxiliary winding support.

Preferably, the unwinding of the second initial service component from the second auxiliary winding support is performed simultaneously with the winding in parallel of the third and fourth elongated elements on the second initial winding support.

Preferably, the winding of the third elongated element on the second initial winding support is performed as a result of a pulling action exerted by the second initial service component after the coupling thereof with the third elongated element.

Preferably, the winding of the fourth elongated element on the second initial winding support is performed as a result of a pulling action exerted by the second initial service component after the coupling thereof with the fourth elongated element.

Preferably, unwinding the third elongated element from the second initial winding support comprises removing said second initial service component from the third elongated element.

Preferably, unwinding the fourth elongated element from the second initial winding support comprises removing said second initial service component from the fourth elongated element.

Preferably, this activity is carried out in the second intermediate unwinding station.

Preferably, the unwinding of the third elongated element from the second initial winding support is performed as a result of a pulling action exerted by the second initial service component.

Preferably, the unwinding of the fourth elongated element from the second initial winding support is performed as a result of a pulling action exerted by the second initial service component.

Preferably, the second initial service component removed from the third elongated element is collected on a second collection winding support.

Preferably, the second initial service component removed from the fourth elongated element is collected on the second collection winding support.

Preferably, the second collection winding support is structurally the same as the second auxiliary winding support.

Preferably, the removal and the collection of said second initial service component is performed during the unwinding of the third elongated element from the second initial winding support.

Preferably, the removal and the collection of said second initial service component is performed during the unwinding of the fourth elongated element from the second initial winding support.

In a first variant embodiment of the first initial winding support, preferably the first initial winding support comprises a storage reel having a winding surface sized to simultaneously receive the first elongated element and the second elongated element in an axially spaced manner.

In this variant embodiment, winding the first elongated element and the second elongated element in parallel on the first initial winding support preferably comprises winding the first elongated element in a first axial position on a storage reel of the first initial winding support and winding the second elongated element in a second axial position on said storage reel of the first initial winding support.

In this variant embodiment, the first auxiliary winding support preferably comprises an auxiliary storage reel comprising a winding surface sized to receive the first initial service component.

In this variant embodiment, preferably the first collection winding support comprises a collecting storage reel comprising a winding surface sized to receive the first initial service component. The auxiliary storage reel is preferably structurally the same as the collecting storage reel.

In this variant embodiment, preferably the first initial service component removed from the first and second elongated elements is collected by winding it on the collecting storage reel of the first collection winding support.

In this variant embodiment, the first elongated element and the second elongated element wound on the storage reel of the first initial winding support preferably have the same winding diameter.

In this variant embodiment, preferably the second initial winding support comprises a storage reel having a winding surface sized to simultaneously receive the third elongated element and the fourth elongated element in an axially spaced manner.

In this variant embodiment, winding the third elongated element and the fourth elongated element in parallel on the second initial winding support preferably comprises winding the third elongated element in a first axial position on a storage reel of the second initial winding support and winding the fourth elongated element in a second axial position on said storage reel of the second initial winding support.

In this variant embodiment, the second auxiliary winding support preferably comprises an auxiliary storage reel comprising a winding surface sized to receive the second initial service component.

In this variant embodiment, preferably the second collection winding support comprises a collecting storage reel comprising a winding surface sized to receive the second initial service component. The auxiliary storage reel of the second auxiliary winding support is preferably structurally the same as the collecting storage reel of the second collection winding support.

Preferably, the auxiliary storage reel of the first auxiliary winding support is structurally the same as the auxiliary storage reel of the second auxiliary winding support.

Preferably, the collecting storage reel of the first collection winding support is structurally the same as the collecting storage reel of the second collection winding support.

In this variant embodiment, preferably the second initial service component removed from the third and fourth elongated elements is collected by winding it on the collecting storage reel of the second collection winding support.

In this variant embodiment, the third elongated element and the fourth elongated element preferably have the same winding diameter.

In a second variant embodiment of the first initial winding support, preferably the first initial winding support comprises a first storage reel and a second storage reel each of which having a winding surface sized to receive an elongated element. The first and the second storage reel of the first initial winding support are preferably structurally distinct and coupled together to rotate about a common rotation axis.

In this variant embodiment, winding the first elongated element and the second elongated element in parallel on the first initial winding support comprises winding the first elongated element on a first storage reel of the first initial winding support and winding the second elongated element on a second storage reel of the first initial winding support.

In this variant embodiment, the first initial service component comprises a first initial service fabric and a second initial service fabric.

Preferably, winding the first elongated element and the second elongated element in parallel comprises associating a first initial service fabric with the first elongated element and a second initial service fabric with the second elongated element.

In this variant embodiment, the first auxiliary winding support preferably comprises a first auxiliary storage reel and a second auxiliary storage reel each of which having a winding surface sized to receive an initial service fabric. The first and the second auxiliary storage reels are preferably structurally distinct and coupled together to rotate about a common rotation axis.

In this variant embodiment, preferably the first collection winding support preferably comprises a first collecting storage reel and a second collecting storage reel each of which having a winding surface sized to receive an initial service fabric. The first and the second collecting storage reel are preferably structurally distinct and coupled together to rotate about a common rotation axis. The first and the second auxiliary storage reel are preferably structurally the same as the first and second collecting storage reel.

Preferably, the first initial service fabric and the second initial service fabric removed from the first and from the second elongated elements are collected by winding them in parallel respectively on the first collecting storage reel and on the second collecting storage reel.

In this variant embodiment, preferably the second initial winding support comprises a first storage reel and a second storage reel each of which having a winding surface sized to receive an elongated element. The first and the second storage reels of the second initial winding support are preferably structurally distinct and coupled together to rotate about a common rotation axis.

In this variant embodiment, the second initial service component comprises a third initial service fabric and a fourth initial service fabric.

Preferably, winding the third elongated element and the fourth elongated element in parallel comprises associating a third initial service fabric with the third elongated element and a fourth initial service fabric with the fourth elongated element.

In this variant embodiment, winding the third elongated element and the fourth elongated element in parallel on the second initial winding support preferably comprises winding the third elongated element on a first storage reel of the second initial winding support and winding the fourth elongated element on a second storage reel of the second initial winding support.

In this variant embodiment, the second auxiliary winding support preferably comprises a first auxiliary storage reel and a second auxiliary storage reel each of which having a winding surface sized to receive an initial service fabric. The first and the second auxiliary storage reels are preferably structurally distinct and coupled together to rotate about a common rotation axis.

In this embodiment, preferably the second collection winding support preferably comprises a first collecting storage reel and a second collecting storage reel each of which having a winding surface sized to receive an initial service fabric. The first and the second collecting storage reel are preferably structurally distinct and coupled together to rotate about a common rotation axis. The first and the second auxiliary storage reel are preferably structurally the same as the first and second collecting storage reel. The first and the second auxiliary storage reel of the first auxiliary winding support are preferably structurally the same as the first and the second auxiliary storage reel of the second auxiliary winding support. The first and the second collecting storage reel of the first collection winding support are preferably structurally the same as the first and the second collecting storage reel of the second collection winding support.

In this variant embodiment, preferably the third initial service fabric and the fourth initial service fabric removed from the third and from the fourth elongated element are collected by winding them in parallel respectively on the first collecting storage reel and on the second collecting storage reel of the second collection winding support.

In this variant embodiment, the third elongated element and the fourth elongated element wound respectively on the first and the second storage reel of the second initial winding support preferably have the same winding diameter.

In this variant embodiment, the first elongated element and the third elongated element wound on the first initial winding support can have different winding diameters.

Preferably, winding the first elongated element on the first final winding support comprises associating the first elongated element with a first final service component.

Preferably, this activity is carried out in a first final winding station.

Preferably, winding the third elongated element on the first final winding support comprises associating the third elongated element with the first final service component.

Preferably, this activity is also carried out in the first final winding station.

The first final service component can comprise, in a first variant embodiment thereof, a first final service fabric and a second final service fabric.

In the first variant embodiment of the first final service component, associating the first elongated element with the first final service component preferably comprises associating the first final service fabric with the first elongated element.

In the first variant embodiment of the first final service component, associating the third elongated element with the first final service component preferably comprises associating the second final service fabric with the third elongated element.

Preferably, the first final service fabric is unwound from a third auxiliary winding support.

Preferably, the second final service fabric is unwound from the third auxiliary winding support.

Preferably, the unwinding of the first final service fabric and of the second final service fabric from the third auxiliary winding support is performed simultaneously with the winding in parallel of the first and of the third elongated element on the first final winding support.

Preferably, the winding of the first elongated element on the first final winding support is performed as a result of a pulling action exerted by the first final service fabric after the coupling thereof with the first elongated element.

Preferably, the winding of the third elongated element on the first final winding support is performed as a result of a pulling action exerted by the second final service fabric after the coupling thereof with the third elongated element.

In a variant of the first and of the second final service fabric, preferably said first final service fabric and said second final service fabric comprise respective support surfaces and respective two axial end shoulders. This type of service fabric is particularly preferred when the first elongated element and the third elongated element have winding diameters that are different from each other.

In this case, associating the first final service fabric with the first elongated element and the second final service fabric with the third elongated element preferably comprises associating the first elongated element with the support surface of the first final service fabric between said two axial end shoulders and the third elongated element with the support surface of the second final service fabric between said two axial end shoulders.

Preferably, the two axial end shoulders of the first final service fabric and the two axial end shoulders of the second final service fabric have equal extension in the radial direction and have greater extension in the radial direction than the extension in the radial direction of the first elongated element and of the third elongated element.

In this way, when the first and the third elongated element are wound on the first final winding support, with the respective first and second final service fabric, the winding diameters of the first and of the third elongated element become the same as each other and the same as the winding diameter of the first or of the second final service fabric.

Preferably, when the first final service fabric and the first elongated element are wound on the first final winding support, the axial end shoulders of the first final service fabric of a coil are in contact with the axial end shoulders of the first final service fabric of a radially adjacent coil.

Similarly, when the second final service fabric and the third elongated element are wound on the first final winding support, preferably the axial end shoulders of the second final service fabric of a coil are in contact with the axial end shoulders of the second final service fabric of a radially adjacent coil.

Preferably, winding the second elongated element on the second final winding support comprises associating the second elongated element with a second final service component.

Preferably, this activity is carried out in a second final winding station.

Preferably winding the fourth elongated element on the second final winding support comprises associating the fourth elongated element with the second final service component.

Preferably, this activity is also carried out in the second final winding station.

The second final service component may, in accordance with the first variant embodiment of the first final service component, comprise a third final service fabric and a fourth final service fabric.

In this variant embodiment, associating the second elongated element with the second final service component preferably comprises associating a third final service fabric with the second elongated element.

In this variant embodiment, associating the fourth elongated element with the second final service component preferably comprises associating a fourth final service fabric with the fourth elongated element.

Preferably, the third final service fabric is unwound from a fourth auxiliary winding support.

Preferably, the fourth final service fabric is unwound from the fourth auxiliary winding support.

Preferably, the unwinding of the third final service fabric and of the fourth final service fabric from the fourth auxiliary winding support is performed simultaneously with the winding in parallel of the second and of the fourth elongated elements on the second final winding support.

Preferably, the winding of the second elongated element on the second final winding support is performed as a result of a pulling action exerted by the third final service fabric after the coupling thereof with the second elongated element.

Preferably, the winding of the fourth elongated element on the second final winding support is performed as a result of a pulling action exerted by the fourth final service fabric after the coupling thereof with the fourth elongated element.

In a variant embodiment of the third and fourth final service fabrics, preferably said third final service fabric and said fourth final service fabric comprise respective support surfaces and respective two axial end shoulders. This type of service fabric is particularly preferred when the second elongated element and the fourth elongated element have winding diameters that are different from each other.

Preferably, this type of the third and of the fourth final service fabric is used in combination with the same type of final service fabric used for the first and the second final service fabrics. Indeed, when the second elongated element has a different winding diameter from the winding diameter of the fourth elongated element, the first elongated element also has a different winding diameter from the winding diameter of the third elongated element, since the first elongated element is the same as the second elongated element and the third elongated element is the same as the fourth elongated element.

In this case, associating the third final service fabric with the second elongated element and the fourth final service fabric with the fourth elongated element comprises preferably associating the second elongated element with the support surface of the third final service fabric between said two axial end shoulders and associating the fourth elongated element with the support surface of the fourth final service fabric between said two axial end shoulders.

Preferably, the two axial end shoulders of the third final service fabric and the two axial end shoulders of the fourth final service fabric have equal extension in the radial direction and have greater extension in the radial direction than the extension in the radial direction of the second elongated element and of the fourth elongated element.

In this way, when the second and the fourth elongated elements are wound on the second final winding support with the respective third and fourth final service fabrics, the winding diameters of the second and fourth elongated elements become the same as each other and equal to the winding diameter of the third or fourth final service fabric.

Preferably, when the third final service fabric and the second elongated element are wound on the second final winding support, the axial end shoulders of the third final service fabric of a coil are in contact with the axial end shoulders of the third final service fabric of a radially adjacent coil.

Similarly, when the fourth final service fabric and the fourth elongated element are wound on the second final winding support, preferably the axial end shoulders of the fourth final service fabric of a coil are in contact with the axial end shoulders of the fourth final service fabric of a radially adjacent coil.

Preferably, the two axial end shoulders of the first final service fabric have equal extension in the radial direction as the axial end shoulders of the third final service fabric.

Preferably, the two axial end shoulders of the second final service fabric have equal extension in the radial direction as the axial end shoulders of the fourth final service fabric.

In a second variant embodiment of the first final service component, said first final service component preferably comprises a support surface and two axial end shoulders. This variant of the first final service component is particularly preferred when the first elongated element and the third elongated element have winding diameters that are different from each other.

In such a variant, associating the first elongated element and the third elongated element with the first final service component preferably comprises associating the first elongated element in a first axial position with the support surface between said two axial end shoulders and associating the third elongated element in a second axial position with the support surface between said two axial end shoulders.

Preferably, the two axial end shoulders have equal extension in the radial direction and have greater extension in the radial direction than the extension in the radial direction of the first elongated element and of the third elongated element.

In this way, when the first and the third elongated elements are wound with the first final service component on the first final winding support, the winding diameters of the first and third elongated elements are the same as each other and equal to the winding diameter of the first final service component.

Preferably, when the first final service component, the first elongated element and the third elongated elements are wound on the first final winding support, the axial end shoulders of the first final service component of a coil are in contact with the axial end shoulders of the first final service component of a radially adjacent coil.

In this variant embodiment, preferably, the first final service component is unwound from a first final auxiliary winding support.

Preferably, the unwinding of the first final service component from the first final auxiliary winding support is performed simultaneously with the winding in parallel of the first and third elongated elements on the first final winding support.

Preferably, the winding of the first and third elongated elements on the first final winding support is performed as a result of a pulling action exerted by the first final service component after the coupling thereof with the first and the third elongated elements.

In a second variant embodiment of the second final service component, said second final service component comprises a support surface and two axial end shoulders. This variant of the second final service component is particularly preferred when the second elongated element and the fourth elongated element have winding diameters that are different from each other. Preferably, this type of the second final service component is used in combination with the second variant of the first final service component. Indeed, when the second elongated element has a different winding diameter from the winding diameter of the fourth elongated element, the first elongated element also has a different winding diameter from the winding diameter of the third elongated element, since the first elongated element is the same as the second elongated element and the third elongated element is the same as the fourth elongated element.

In this variant embodiment, associating the second elongated element and the fourth elongated element with the second final service component comprises associating the second elongated element with the support surface in a first axial position between said two axial end shoulders and associating the fourth elongated element with the support surface in a second axial position between said two axial end shoulders.

Preferably, the two axial end shoulders have equal extension in the radial direction and have greater extension in the radial direction than the extension in the radial direction of the second elongated element and of the fourth elongated element.

In this way, when the second and the fourth elongated element are wound with the second final service component on the second final winding support, the winding diameters of the second and fourth elongated elements are the same as each other and equal to the winding diameter of the second final service component.

Preferably, when the second final service component, the second elongated element and the fourth elongated element are wound on the second final winding support, the axial end shoulders of the second final service component of a coil are in contact with the axial end shoulders of the second final service component of a radially adjacent coil.

Preferably, the two axial end shoulders of the second final service component have equal extension in the radial direction as the axial end shoulders of the first final service component.

In this variant embodiment, preferably, the second final service component is unwound from a second final auxiliary winding support.

Preferably, the unwinding of the second final service component from the second final auxiliary winding support is performed simultaneously with the winding in parallel of the second and fourth elongated elements on the second final winding support.

Preferably, the winding of the second and fourth elongated elements on the second final winding support is performed as a result of a pulling action exerted by the second final service component after the coupling thereof with the second and fourth elongated elements.

In a first variant embodiment of the first final winding support, preferably the first final winding support comprises a storage reel having a winding surface sized to simultaneously receive the first elongated element and the third elongated element in an axially spaced manner.

In this variant embodiment, winding the first elongated element and the third elongated element on the first final winding support comprises winding the first elongated element in a first axial position on a storage reel of the first final winding support and winding the third elongated element in a second axial position on said storage reel of the first final winding support.

In this variant embodiment, preferably the second final winding support comprises a storage reel having a winding surface sized to simultaneously receive the second elongated element and the fourth elongated element in an axially spaced manner.

In this variant embodiment, winding the second elongated element and the fourth elongated element in parallel on the second final winding support comprises winding the second elongated element in a first axial position on a storage reel of the second final winding support and winding the fourth elongated element in a second axial position on said storage reel of the second final winding support.

In this variant embodiment, the third auxiliary winding support preferably comprises an auxiliary storage reel.

In accordance with the first variant embodiment of the first final service component, such an auxiliary storage reel comprises a winding surface sized to simultaneously receive the first final service fabric and the second final service fabric in an axially spaced manner.

In this embodiment, the fourth auxiliary winding support preferably comprises an auxiliary storage reel comprising a winding surface sized to simultaneously receive the third final service fabric and the fourth final service fabric in an axially spaced manner.

Preferably, the auxiliary storage reel of the third auxiliary winding support is structurally the same as the auxiliary storage reel of the fourth auxiliary winding support.

In accordance with the second variant embodiment of the first final service component, the auxiliary storage reel of the third auxiliary winding support comprises a winding surface sized to receive the first final service component.

In this embodiment, the fourth auxiliary winding support preferably comprises an auxiliary storage reel comprising a winding surface sized to receive the second final service component.

Preferably, the auxiliary storage reel of the third auxiliary winding support is structurally the same as the auxiliary storage reel of the fourth auxiliary winding support.

In a second variant embodiment of the first final winding support, preferably the first final winding support comprises a first storage reel and a second storage reel each of which having a winding surface sized to receive an elongated element. The first and the second storage reel of the first final winding support are preferably structurally distinct and coupled together to rotate about a common rotation axis.

In this variant embodiment, winding the first elongated element and the third elongated element on the first final winding support comprises winding the first elongated element on a first storage reel of the first final winding support and winding the third elongated element on a second storage reel of the first final winding support.

In this variant embodiment, the third auxiliary winding support preferably comprises a first auxiliary storage reel and a second auxiliary storage reel each of which having a winding surface sized to respectively receive the first and the second final service fabric. The first and the second auxiliary storage reels are preferably structurally distinct and coupled together to rotate about a common rotation axis.

In this variant embodiment, preferably the second final winding support comprises a first storage reel and a second storage reel each of which having a winding surface sized to receive an elongated element. The first and the second storage reel of the second final winding support are preferably structurally distinct and coupled together to rotate about a common rotation axis.

In this variant embodiment, winding the second elongated element and the fourth elongated element in parallel on the second final winding support comprises winding the second elongated element on a first storage reel of the second final winding support and winding the fourth elongated element on a second storage reel of the second final winding support.

In this embodiment, the fourth auxiliary winding support preferably comprises a first auxiliary storage reel and a second auxiliary storage reel each of which having a winding surface sized to respectively receive the third and the fourth final service fabric. The first and the second auxiliary storage reels are preferably structurally distinct and coupled together to rotate about a common rotation axis.

The first and the second auxiliary storage reels of the third auxiliary winding support are preferably structurally the same as the first and the second auxiliary storage reel of the fourth auxiliary winding support. The first and the second auxiliary storage reels of the third auxiliary winding support are preferably structurally the same as the first and the second auxiliary storage reel of the first auxiliary winding support. The first and the second auxiliary storage reels of the second auxiliary winding support are preferably structurally the same as the first and the second auxiliary storage reel of the fourth auxiliary winding support.

When the first initial winding support comprises a first and a second storage reel, a coupling device is preferably provided comprising a first coupling body and a second coupling body that are rotatable with respect to one another about a rotation axis.

In this case, preferably, the first storage reel of the first initial winding support is arranged on the first coupling body and the second storage reel of the first initial winding support is arranged on the second coupling body.

When the second initial winding support comprises a first and a second storage reel, a coupling device is preferably provided comprising a first coupling body and a second coupling body that are rotatable with respect to one another about a rotation axis and the first storage reel of the second initial winding support is arranged on the first coupling body and the second storage reel of the second initial winding support is arranged on the second coupling body.

When the first final winding support comprises a first and a second reel, a coupling device is preferably provided comprising a first coupling body and a second coupling body that are rotatable with respect to one another about a rotation axis and the first storage reel of the first final winding support is arranged on the first coupling body and the second storage reel of the first final winding support is arranged on the second coupling body.

When the second final winding support comprises a first and a second reel, a coupling device is preferably provided comprising a first coupling body and a second coupling body that are rotatable with respect to one another about a rotation axis and the first storage reel of the second final winding support is arranged on the first coupling body and the second storage reel of the second final winding support is arranged on the second coupling body.

Preferably, before unwinding the first elongated element and the second elongated element from the first initial winding support, the first initial winding support is temporarily stored in a storage.

Preferably, after having wound the first elongated element and the second elongated element on the first initial winding support, the first initial winding support is transferred from the initial winding station into a storage.

Preferably, before unwinding the first elongated element and the second elongated element from the first initial winding support, the first initial winding support is transferred from the storage to the transferring device.

Preferably, before unwinding the third elongated element and the fourth elongated element from the second initial winding support, the second initial winding support is temporarily stored in a storage.

Preferably, after having wound the third elongated element and the fourth elongated element on the second initial winding support, the second initial winding support is transferred from the initial winding station into a storage.

Preferably, before unwinding the third elongated element and the fourth elongated element from the second initial winding support, the second initial winding support is transferred from the storage to the transferring device.

Preferably, before arranging the first final winding support in the building line, the first final winding support is temporarily stored in a further storage.

Preferably, after having wound the first elongated element and the third elongated element on the first final winding support, the first final winding support is transferred from the transferring device to the further storage.

Preferably, before simultaneously depositing the first elongated element and the third elongated element on the forming drum, the first final winding support is transferred from the further storage to the building line.

Preferably, before arranging the second final winding support in the building line, the second final winding support is temporarily stored in a further storage.

Preferably, after having wound the second elongated element and the fourth elongated element on the second final winding support, the second final winding support is transferred from the transferring device to the further storage.

Preferably, before simultaneously depositing the second elongated element and the fourth elongated element on the forming drum, the second final winding support is transferred from the further storage to the building line.

Preferably, an extrusion line is provided comprising at least one extruder device configured to extrude a first elongated element and a second elongated element of a first type or a third elongated element and a fourth elongated element of a second type.

Preferably, said initial winding station is operatively associated with the extrusion line.

Further characteristics and advantages of the present invention will be more evident from the following description of preferred embodiments thereof made with reference to the appended drawings.

In such drawings:
- figure 1 is a schematic representation of a plant for building tyres for vehicle wheels in accordance with the present invention;
- figures 2 to 4 are schematic representations of some parts of the plant of figure 1;
- figures 5 and 6 represent two types of winding supports that can be used in the plant of figure 1 and in a method for arranging elongated elements in a process for building tyres for vehicle wheels in accordance with the present invention;
- figures 7A and 8A represent two types of auxiliary winding supports that can be used in the plant of figure 1 and in the method for arranging elongated elements in accordance with the present invention;
- figures 7B and 8B represent two types of collecting winding supports that can be used in the plant of figure 1 and in the method for arranging elongated elements in accordance with the present invention;
- figures 9 to 11 represent three types of service components that can be used in the plant of figure 1 and in the method for arranging elongated elements in accordance with the present invention;
- figures 12 to 16 are schematic representations of possible variants of the method for arranging elongated elements in accordance with the present invention; and
- figure 17 is a schematic side view of a coupling device connected to two storage reels that can be used in the plant of figure 1 and in the method for arranging elongated elements in accordance with the present invention.

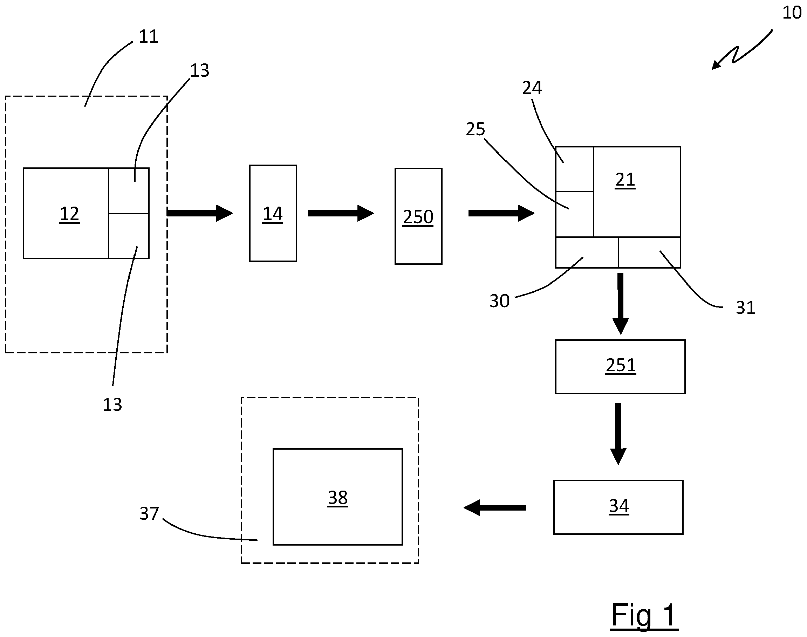

With reference to figure 1, a plant for building tyres for vehicle wheels in accordance with the present invention has been wholly indicated with reference numeral 10.

The plant 10 comprises an extrusion line 11 of elongated elements made of elastomeric material. The extrusion line 11 comprises an extruder device 12 configured to operate on an elastomeric material and extrude it in the form of elongated element. The extrusion line 11 comprises two shaper elements 13 configured to operate on a pair of elongated elements exiting from the extruder device 12 and obtain a first elongated element 150 and a second elongated element 151 of a first type that are the same as each other. The same extrusion line 11 may be used, after a change of elastomeric material, to provide a second pair of elongated elements, in particular a third elongated element 152 and a fourth elongated element 153 of a second type that are the same as each other and different from the first 150 and second elongated elements 151.

The plant 10 also comprises an initial winding station 14 in which the extruded elongated elements are wound on initial winding supports.

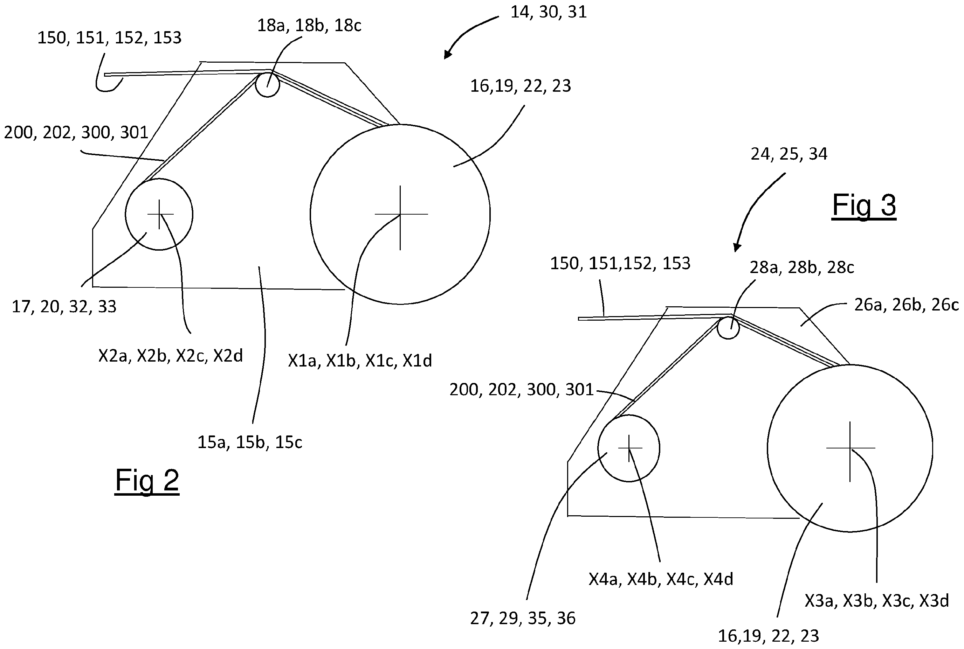

Figure 2 schematically represents an initial winding station 14 which operates on the first elongated element 150 and on the second elongated element 151. The same initial winding station 14 (or an analogous initial winding station) is configured to operate on the third elongated element 152 and on the fourth elongated element 153. Therefore, what will be described with reference to the initial winding station 14 when operating on the first elongated element 150 and on the second elongated element 151 is valid for the same initial winding station 14 (or for an analogous initial winding station) when operating on the third elongated element 152 and on the fourth elongated element 153.

The initial winding station 14 comprises a frame 15a on which a first initial winding support 16 that is rotatable about a respective rotation axis X1a can be mounted and dismounted. It is also possible to mount and dismount a first auxiliary winding support 17 that is rotatable about a respective rotation axis X2a on the frame 15a.

The first auxiliary winding support 17 is configured to unwind a first initial service component 200. The first initial service component 200 may be a single service fabric configured to receive the first elongated element 150 and the second elongated element 151 in distinct axial positions or may comprise a first initial service fabric 200a and a second initial service fabric 201a. In the case in which the first initial service component 200 is a single fabric, it is fed to a coupling roller 18a. In the case in which the first initial service component 200 comprises a first initial service fabric 200a and a second initial service fabric 201a, they are simultaneously fed to the coupling roller 18a. In both cases, the first elongated element 150 and the second elongated element 151 are also fed to the coupling roller 18a. At the coupling roller 18a, the first initial service component 200 is coupled with a base surface 150a of the first elongated element 150 and with a base surface 151a of the second elongated element 151 (or the first initial service fabric 200a is coupled with the base surface 150a of the first elongated element 150 and the second initial service fabric 201a is coupled with the base surface 151a of the second elongated element 151).

The first elongated element 150 and the second elongated element 151 with the first initial service component 200 coupled are thus wound in coils and simultaneously on the first initial winding support 16.

This activity may be carried out by motorizing the rotation axis X1a of the first initial winding support 16 and leaving the coupling roller 18a idle. The rotation axis X2a of the first auxiliary winding support may be idle or preferably slightly braked. Alternatively, both the rotation axis X1a of the first initial winding support 16 and the coupling roller 18a can be motorized and the rotation axis X2a of the first auxiliary winding support 17 can be idle or preferably slightly braked. In any case, the winding of the first elongated element 150 and of the second elongated element 151 on the first initial winding support 16 is carried out by exerting a pulling or traction action on the initial service component 200 by the first initial winding support 16.

Similarly, when the initial winding station 14 is used with the third elongated element 152 and the fourth elongated element 153, it is possible to mount and dismount a second initial winding support 19 that is rotatable about a respective rotation axis X1b on the frame 15a. It is also possible to mount and dismount a second auxiliary winding support 20 that is rotatable about a respective rotation axis X2b on the frame 15a.

The second auxiliary winding support 20 is configured to unwind a second initial service component 201 in the same ways described above with reference to the first initial service component 200. Also in this case, the second initial service component 201 can be a single service fabric or can comprise a third initial service fabric 202a and a fourth initial service fabric 203a. At the coupling roller 18a, the second initial service component 201 is coupled with a base surface 152a of the third elongated element 152 and with a base surface 153a of the fourth elongated element 153 (or the third initial service fabric 202a is coupled with the base surface 152a of the third elongated element 152 and the fourth initial service fabric 203a is coupled with the base surface 153a of the fourth elongated element 153).

The third elongated element 152 and the fourth elongated element 153 with the second initial service component 201 coupled, are thus wound in coils and simultaneously on the second initial winding support 19 in the same ways described with reference to the first elongated element 150 and to the second elongated element 151.

The plant 10 also comprises a storage 250 configured to temporarily house the first initial winding support 16 (or a plurality of first initial winding supports) and the second initial winding support 19 (or a plurality of second initial winding supports). The first initial winding support 16 is transferred from the initial winding station 14 to the storage 250. Similarly, the second initial winding support 19 is transferred from the initial winding station 14 to the storage 250.

The plant 10 also comprises a transferring device 21 configured to simultaneously operate on the first elongated element 150, on the second elongated element 151, on the third elongated element 152 and on the fourth elongated element 153 wound on the respective first initial winding support 16 and second initial winding support 19.

The first initial winding support 16 and the second initial winding support 19 are transferred to the transferring device 21 from the storage 250. Alternatively, the first initial winding support 16 and the second initial winding support 19 are transferred to the transferring device 21 directly from the initial winding station 14.

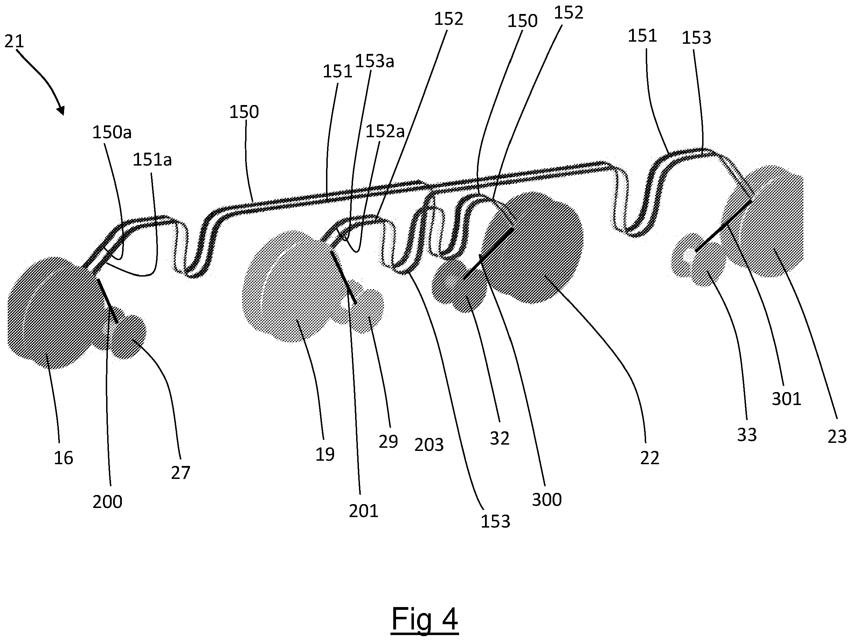

As shown schematically in figure 4, the transferring device 21 is configured to transfer the first elongated element 150 from the first initial winding support 16 to a first final winding support 22 and to transfer the third elongated element 152 from the second initial winding support 19 to the first final winding support 22. The transferring device 21 is also configured to transfer the second elongated element 151 from the first initial winding support 16 to a second final winding support 23 and to transfer the fourth elongated element 153 from the second initial winding support 19 to the second final winding support 23.

For this purpose, in the transferring device 21 there are two intermediate unwinding stations 24, 25. In the first intermediate unwinding station 24 the first initial winding support 16 is acted on to unwind the first elongated element 150 and the second elongated element 151 and decouple the first initial service component 200 from the first elongated element 150 and from the second elongated element 151. In the second intermediate unwinding station 25 the second initial winding support 19 is acted on to unwind the third elongated element 152 and the fourth elongated element 153 and decouple the second initial service component 201 from the third elongated element 152 and from the fourth elongated element 153. The first intermediate unwinding station 24 is the same as the second intermediate unwinding station 25 (therefore the same features of the first intermediate unwinding station 24 are present in the second intermediate unwinding station 25).

Figure 3 represents the first intermediate unwinding station 24 which comprises a frame 26a on which it is possible to mount and dismount the first initial winding support 16 that is rotatable about a respective rotation axis X3a. It is also possible to mount and dismount a first collection winding support 27 that is rotatable about a respective rotation axis X4a on the frame 26a.

The first collection winding support 27 is configured to wind the first initial service component 200. The first initial service component 200 is fed to the first collection winding support 27 from a decoupling roller 28a at which the first initial service component 200 is decoupled from the base surface 150a of the first elongated element 150 and from the base surface 151a of the second elongated element 151.

This activity may be carried out by motorizing the rotation axis X4a of the first collection winding support 27 and leaving the decoupling roller 28a idle. The rotation axis X3a of the first initial winding support 16 may be idle or preferably slightly braked. Alternatively, both the rotation axis X4a of the first collection winding support 27 and the decoupling roller 28a can be motorized and the rotation axis X3a of the first initial winding support 16 can be idle or preferably slightly braked. In any case, the unwinding of the first elongated element 150 and of the second elongated element 151 from the first initial winding support 16 is carried out by exerting a pulling or traction action on the first initial service component 200 by the first collection winding support 27.

Similarly, the second intermediate unwinding station 25 (also represented in figure 3) comprises a frame 26b on which it is possible to mount and dismount the second initial winding support 19 that is rotatable about a respective rotation axis X3b. It is also possible to mount and dismount a second collection winding support 29 that is rotatable about a respective rotation axis X4b on the frame 26b.

The second collection winding support 29 is configured to wind the second initial service component 201. The secondo initial service component 201 is fed to the second collection winding support 29 from a decoupling roller 28b at which the second initial service component 201 is decoupled from the base surface 152a of the third elongated element 152 and from the base surface 153a of the fourth elongated element 153.

This activity can be carried out according to what is described in relation to the unwinding and to the collection of the first initial service component 200.

The first elongated element 150, the second elongated element 151, the third elongated element 152 and the fourth elongated element 153 are progressively sent towards the first final winding support 22 and the second final winding support 23 to be wound on them, while they are unwound from the first initial winding support 16 and from the second initial winding support 19.

As illustrated in figure 1, in the transferring device 21 there are two final winding stations 30, 31. In the first final winding station 30 the first final support winding 22 is acted on to wind the first elongated element 150 and the third elongated element 152 thereupon. In the second final winding station 31 the second final support winding 23 is acted on to wind the second elongated element 151 and the fourth elongated element 153 thereupon. The first final winding station 30 and the second final winding station 31 are the same as each other and the same as the initial winding station 14 (therefore the same features of the first final winding station 30 are present in the second final winding station 31 and in the initial winding station 14).

The first final winding station 30 comprises a frame 15b on which it is possible to mount and dismount the first final winding support 22 that is rotatable about a respective rotation axis X1c. It is also possible to mount and dismount a third auxiliary winding support 32 that is rotatable about a respective rotation axis X2c on the frame 15b.

The third auxiliary winding support 32 is configured to unwind a first final service component 300 that is fed to a coupling roller 18b on which the first elongated element 150 and the third elongated element 152 are also fed. At the coupling roller 18b, the first final service component 300 is coupled with the base surface 150a of the first elongated element 150 and with the base surface 152a of the third elongated element 152.

The first elongated element 150 and the third elongated element 152 with the first final service component 300 coupled are thus wound in coils and simultaneously on the first final winding support 22.

This activity may be carried out by motorizing the rotation axis of the first final winding support 22 and leaving the coupling roller 18b idle. The rotation axis of the third auxiliary winding support 32 can be idle or preferably slightly braked. Alternatively, both the rotation axis of the first final winding support 22 and the coupling roller 18b can be motorized and the rotation axis of the third auxiliary winding support 32 can be idle or preferably slightly braked. In any case, the winding of the first 150 and of the third elongated element 152 on the first final winding support 22 is carried out by exerting a pulling or traction action on the first final service component 300 by the first final winding support 22.

Similarly, the second final winding station 31 comprises a frame 15c on which it is possible to mount and dismount the second final winding support 23 that is rotatable about a respective rotation axis X1d. It is also possible to mount and dismount a fourth auxiliary winding support 33 that is rotatable about a respective rotation axis X2d on the frame 15c.

The fourth auxiliary winding support 33 is configured to unwind a second final service component 301 that is fed to a coupling roller 18c on which the second elongated element 151 and the fourth elongated element 153 are also fed. At the coupling roller 18c, the second final service component 301 is coupled with the base surface 151a of the second elongated element 151 and with the base surface 153a of the fourth elongated element 153.

The second elongated element 151 and the fourth elongated element 153 with the second final service component 301 coupled are thus wound in coils and simultaneously on the second final winding support 23.

The second elongated element 151 and the fourth elongated element 153 with the final service component 301 coupled, are thus wound in coils and simultaneously on the second final winding support 23 in the same ways described with reference to the first elongated element 150 and to the third elongated element 152.

The plant 10 also comprises a further storage 251.

The further storage 251 is configured to temporarily house the first final winding support 22 (or a plurality of first final winding supports) and the second final winding support 23 (or a plurality of second initial winding supports). The first final winding support 22 is transferred from the first final winding station 30 to the further storage 251. Similarly, the second final winding support 23 is transferred from the second final winding station 31 to the further storage 251.

The further storage 251 and the storage 250 can physically coincide or can be two storages that are physically distinct from each other.

The plant 10 also comprises a final unwinding station 34 (also illustrated in figure 3) configured to simultaneously unwind the first elongated element 150 and the third elongated element 152 from the first final winding support 22 and/or to unwind the second elongated element 151 and the fourth elongated element 153 from the second final winding support 23.

The first final winding support 22 and the second final winding support 23 are transferred to the final unwinding station 34 from the further storage 251. Alternatively, the first final winding support 22 and the second final winding support 23 are transferred to the final unwinding station 34 directly from the first final winding station 30 and from the second final winding station 31.

In the final unwinding station 34 the first final winding support 22 is acted on to unwind the first elongated element 150 and the third elongated element 152 and decouple the first final service component 300 from the first elongated element 150 and from the third elongated element 152. In the final unwinding station 34 it is also possible to act, alternatively, on the second final winding support 23 to unwind the second elongated element 151 and the fourth elongated element 153 and decouple the second final service component 301 from the second elongated element 151 and from the fourth elongated element 153. The final unwinding station 34 is the same as the first unwinding station 24 and as the second intermediate unwinding station 25 (therefore the same features of the first unwinding station 24 and of the second intermediate unwinding station 25 are also present in the final unwinding station 34).

When the first final winding support 22 is acted on in the final unwinding station 34, the first final winding support 22 can be mounted and dismounted on a frame 26c and is rotatable about a respective rotation axis X3c. On the frame 26c it is also possible to mount and dismount a third collection winding support 35 that is rotatable about a respective rotation axis X4c.

The third collection winding support 35 is configured to wind the first final service component 300. The first final service component 300 is fed to the third collection winding support 35 from a decoupling roller 28c at which the first final service component 300 is decoupled from the base surface 150a of the first elongated element 150 and from the base surface 152a of the third elongated element 152.

This activity may be carried out by motorizing the rotation axis X4c of the third collection winding support 35 and leaving the decoupling roller 28c idle. The rotation axis X3c of the first final winding support 22 may be idle or preferably slightly braked. Alternatively, both the rotation axis X4c of the third collection winding support 35 and the decoupling roller 28c can be motorized and the rotation axis X3c of the first final winding support 22 can be idle or preferably slightly braked. In any case, the unwinding of the first elongated element 150 and of the third elongated element 152 from the first final winding support 22 is carried out by exerting a pulling or traction action on the first final service component 300 by the third collection winding support 35.

When the second final winding support 23 is acted on in the final unwinding station 34, the second final winding support 23 can be mounted and dismounted from the frame 26c and is rotatable about a respective rotation axis X3d. On the frame 26c it is also possible to mount and dismount a fourth collection winding support 36 that is rotatable about a respective rotation axis X4d.

The fourth collection winding support 36 is configured to wind the second final service component 301. The second final service component 301 is fed to the fourth collection winding support 36 from the decoupling roller 28c at which the second final service component 301 is decoupled from the base surface 151a of the second elongated element 151 and from the base surface 153a of the fourth elongated element 153.

This activity may be carried out by motorizing the rotation axis X4d of the fourth collection winding support 36 and leaving the decoupling roller 28c idle. The rotation axis X3d of the second final winding support 23 may be idle or preferably slightly braked. Alternatively, both the rotation axis X4d of the fourth collection winding support 36 and the decoupling roller 28c can be motorized and the rotation axis X3d of the second final winding support 23 can be idle or preferably slightly braked. In any case, the unwinding of the second elongated element 151 and of the fourth elongated element 153 from the second final winding support 23 is carried out by exerting a pulling or traction action on the second final service component 301 by the fourth collection winding support 36.

The plant 10 comprises a building line 37 in which at least one forming drum 38 is arranged. The forming drum 38 is operatively associated with the final unwinding station 34 to simultaneously receive the two elongated elements that are simultaneously unwound from the respective final winding support.

In the case in which the first elongated element 150 and the third elongated element 152 are simultaneously unwound from the first final winding support 22, the first elongated element 150 and the third elongated element 152 are deposited simultaneously on the forming drum 38.

In the case in which the second elongated element 151 and the fourth elongated element 153 are simultaneously unwound from the second final winding support 23, the second elongated element 151 and the fourth elongated element 153 are deposited simultaneously on the forming drum 38.

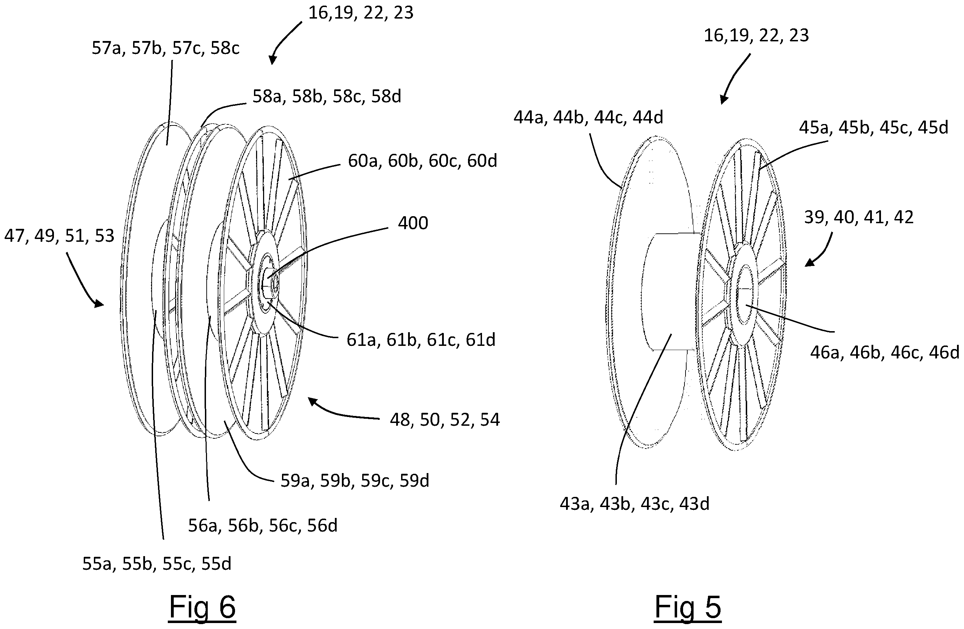

The first initial winding support 16, the second initial winding support 19, the first final winding support 22 and the second final winding support 23 may alternatively be made according to the embodiments illustrated in figures 5 and 6.

In accordance with the embodiment of figure 5, the first initial winding support 16 comprises a storage reel 39 and the second initial winding support 19 comprises a storage reel 40. Similarly, the first final winding support 22 comprises a storage reel 41 and the second final winding support 23 comprises a storage reel 42. Such storage reels 39, 40, 41, 42 are the same as each other in structure and therefore only one storage reel will be described since such a description is also valid for the other storage reels.

Each storage reel 39, 40, 41, 42 comprises a winding surface 43a, 43b, 43c, 43d sized to wind a pair of elongated elements (with the relative service component) in coils. The coils of an elongated element are axially spaced from the coils of the other elongated element along the winding surface 43a, 43b, 43c, 43d. The winding surface 43a, 43b, 43c, 43d is axially delimited by a first annular body 44a, 44b, 44c, 44d and by a second annular body 45a, 45b, 45c, 45d. The winding surface 43a, 43b, 43c, 43d is substantially cylindrical and extends around a through cavity 46a, 46b, 46c, 47d able to be crossed by a shaft (not shown) about which the storage reel 39, 40, 41, 42 can rotate.

In accordance with the embodiment of figure 6, the first initial winding support 16 comprises a first storage reel 47 and a second storage reel 48 and the second initial winding support 19 comprises a first storage reel 49 and a second storage reel 50. Similarly, the first final winding support 22 comprises a first storage reel 51 and a second storage reel 52 and the second final winding support 23 comprises a first storage reel 53 and a second storage reel 54. Such first storage reels 47, 49, 51, 53 are the same as each other in structure and therefore only one first storage reel will be described such a description is also valid for the other first storage reels. Such second storage reels 48, 50, 51, 52 are the same as each other in structure and therefore only one second storage reel will be described such a description is also valid for the other second storage reels.

Each first storage reel 47, 49, 51, 53 comprises a winding surface 55a, 55b, 55c, 55d sized to wind only one elongated element with the relative service component (in this case a single service fabric is applied to every elongated element) in coils. Each second storage reel 48, 50, 52, 54 comprises a winding surface 56a, 56b, 56c, 56d sized to wind only one elongated element with the relative service component (in this case a single service fabric is applied to every elongated element) in coils. The winding surface 55a, 55b, 55c, 55d of the first storage reel 47, 49, 51, 53 is axially delimited by a first annular body 57a, 57b, 57c, 57d and by a second annular body 58a, 58b, 58c, 58d. The winding surface 56a, 56b, 56c, 56d of the second storage reel 48, 50, 52, 54 is axially delimited by a first annular body 59a, 59b, 59c, 59d and by a second annular body 60a, 60b, 60c, 60d. The winding surfaces 55a, 55b, 55c, 55d, 56a, 56b, 56c, 56d of the first and of the second storage reel are substantially cylindrical and extend around respective through cavities 61a, 61b, 61c, 61d able to be crossed by a coupling device 400 configured to structurally couple the first storage reel 47, 49, 51, 53 and the second storage reel 48, 50, 52, 54 and make them rotatable, possibly independently from one another, about a common rotation axis.

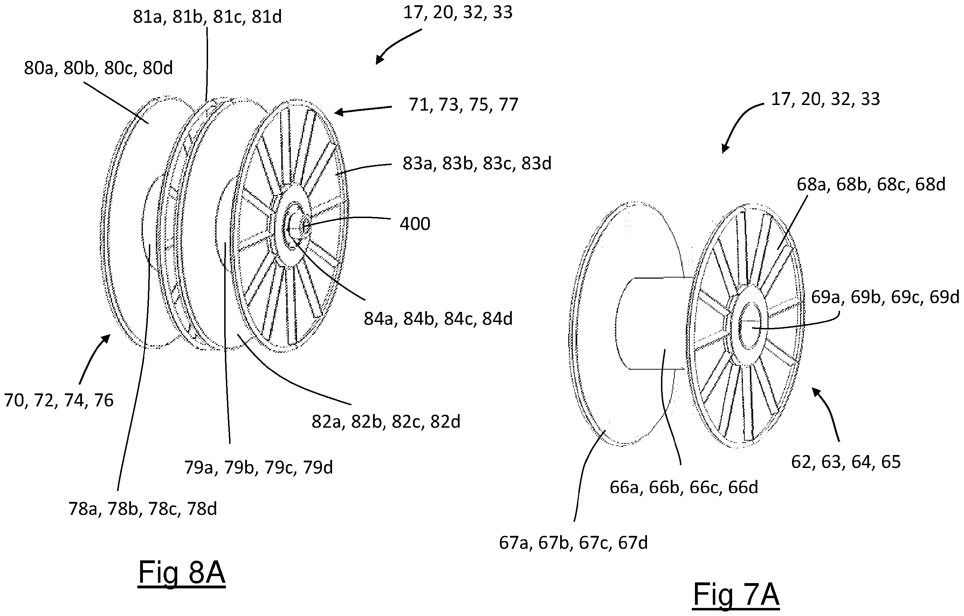

The first auxiliary winding support 17, the second auxiliary winding support 20, the third auxiliary winding support 32 and the fourth auxiliary winding support 33 can alternatively be made according to the embodiments illustrated in figures 7A and 8A.

In accordance with the embodiment of figure 7A, the first auxiliary winding support 17 comprises an auxiliary storage reel 62, the second auxiliary winding support 20 comprises an auxiliary storage reel 63, the third auxiliary winding support 32 comprises an auxiliary storage reel 64 and the fourth auxiliary winding support 33 comprises an auxiliary storage reel 65. Such auxiliary storage reels 62, 63, 64, 65 are the same as each other in structure and therefore only one auxiliary storage reel will be described since such a description is also valid for the other auxiliary storage reels.

Each auxiliary storage reel 62, 63, 64, 65 comprises a winding surface 66a, 66b, 66c, 66d sized to wind a service component in coils. In the case in which the service component comprises two service fabrics, the coils of one service fabric are axially spaced from the coils of the other service fabric along the winding surface 66a, 66b, 66c, 66d. The winding surface 66a, 66b, 66c, 66d is axially delimited by a first annular body 67a, 67b, 67c, 67d and by a second annular body 68a, 68b, 68c, 68d. The winding surface 66a, 66b, 66c, 66d is substantially cylindrical and extends around a through cavity 69a, 69b, 69c, 69d able to be crossed by a shaft (not shown) about which the auxiliary storage reel 62, 63, 64, 65 can rotate.

In accordance with the embodiment of figure 8A, the first auxiliary winding support 17 comprises a first auxiliary storage reel 70 and a second auxiliary storage reel 71, the second auxiliary winding support 20 comprises a first auxiliary storage reel 72 and a second auxiliary storage reel 73, the third auxiliary winding support 32 comprises a first auxiliary storage reel 74 and a second auxiliary storage reel 75 and the fourth auxiliary winding support 33 comprises a first auxiliary storage reel 76 and a second auxiliary storage reel 77. Such first auxiliary storage reels 70, 72, 74, 76 are the same as each other in structure and therefore only one first auxiliary storage reel will be described since such a description is also valid for the other first auxiliary storage reels. Such second auxiliary storage reels 71, 73, 75, 77 are the same as each other in structure and therefore only one second auxiliary storage reel will be described since such a description is also valid for the other second auxiliary storage reels. In this embodiment, the service components each comprise two service fabrics.

Each first auxiliary storage reel 70, 72, 74, 76 comprises a winding surface 78a, 78b, 78c, 78d sized to wind a first service fabric in coils. The second auxiliary storage reel 71, 73, 75, 77 comprises a winding surface 79a, 79b, 79c, 79d sized to wind a second service fabric in coils. The winding surface 78a, 78b, 78c, 78d of the first auxiliary storage reel 70, 72, 74, 76 is axially delimited by a first annular body 80a, 80b, 80c, 80d and by a second annular body 81a, 81b, 81c, 81d. The winding surface 79a, 79b, 79c, 79d of the second auxiliary storage reel 71, 73, 75, 77 is axially delimited by a first annular body 82a, 82b, 82c, 82d and by a second annular body 83a, 83b, 83c, 83d. The winding surfaces 78a, 78b, 78c, 78d, 79a, 79b, 79c, 79d are substantially cylindrical and extend around respective through cavities 84a, 84b, 84c, 84d able to be crossed by a coupling device 400 configured to structurally couple the first auxiliary storage reel 70, 72, 74, 76 and the second auxiliary storage reel 71, 73, 75, 77 and make them rotatable, possibly independently from one another, about a common rotation axis.

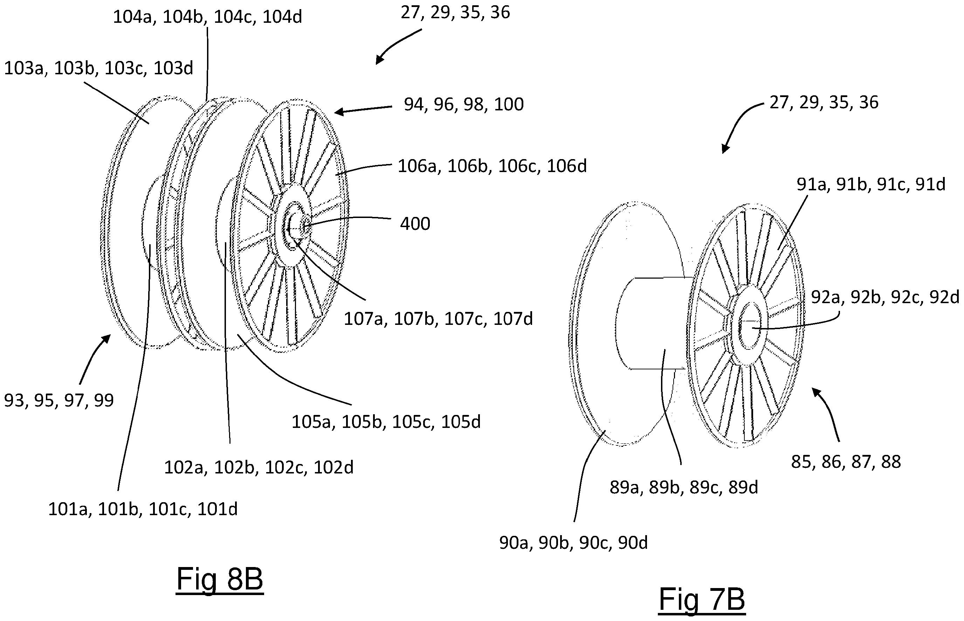

The first collection winding support 27, the second collection winding support 29, the third collection winding support 35 and the fourth collection winding support 36 can alternatively be made according to the embodiments illustrated in figures 7B and 8B.

In accordance with the embodiment of figure 7B, the first collection winding support 27 comprises a collection storage reel 85, the second collection winding support 29 comprises a collection storage reel 86, the third collection winding support 35 comprises a collection storage reel 87 and the fourth collection winding support 36 comprises a collection storage reel 88. Such collection storage reels 85, 86, 87, 88 are the same as each other in structure and therefore only one collection storage reel will be described since such a description is also valid for the other collection storage reels.

Each collecting storage reel 85, 86, 87, 88 comprises a winding surface 89a, 89b, 89c, 89d sized to wind a service component in coils. In the case in which the service component comprises two service fabrics, the coils of one service fabric are axially spaced from the coils of the other service fabric along the winding surface 89a, 89b, 89c, 89d. The winding surface 89a, 89b, 89c, 89d is axially delimited by a first annular body 90a, 90b, 90c, 90d and by a second annular body 91a, 91b, 91c, 91d. The winding surface 89a, 89b, 89c, 89d is substantially cylindrical and extends around a through cavity 92a, 92b, 92c, 92d able to be crossed by a shaft (not shown) about which the collection storage reel 85, 86, 87, 88 can rotate.

In accordance with the embodiment of figure 8B, the first collection winding support 27 comprises a first collecting storage reel 93 and a second collecting storage reel 94, the second collection winding support 29 comprises a first collecting storage reel 95 and a second collecting storage reel 96, the third collection winding support 35 comprises a first collecting storage reel 97 and a second collecting storage reel 98 and the fourth collection winding support 36 comprises a first collecting storage reel 99 and a second collecting storage reel 100. Such first collection storage reels 93, 95, 97, 99 are the same as each other in structure and therefore only one first collection storage reel will be described since such a description is also valid for the other first collection storage reels. Such second collection storage reels 94, 96, 98, 100 are the same as each other in structure and therefore only one second collection storage reel will be described since such a description is also valid for the other second collection storage reels. In this embodiment, the service components each comprise two service fabrics.

Each first collection storage reel 93, 95, 97, 99 comprises a winding surface 101a, 101b, 101c, 101d sized to wind a first service fabric in coils. The second collection storage reel 94, 96, 98, 100 comprises a winding surface 102a, 102b, 102c, 102d sized to wind a second service fabric in coils. The winding surface 101a, 101b, 101c, 101d of the first collecting storage reel 93, 95, 97, 99 is axially delimited by a first annular body 103a, 103b, 103c, 103d and by a second annular body 104a, 104b, 104c, 104d. The winding surface 102a, 102b, 102c, 102d of the second collecting storage reel 94, 96, 98, 100 is axially delimited by a first annular body 105a, 105b, 105c, 105d and by a second annular body 106a, 106b, 106c, 106d. The winding surfaces 101a, 101b, 101c, 101d, 102a, 102b, 102c, 102d are substantially cylindrical and extend around respective through cavities 107a, 107b, 107c, 107d able to be crossed by a coupling device 400 configured to structurally couple the first collection storage reel 93, 95, 97, 99 and the second collection storage reel 94, 96, 98, 100 and make them rotatable, possibly independently from one another, about a common rotation axis.

The first initial service component 200, the second initial service component 201, the first final service component 300 and the second final service component 301 are preferably made of polythene, nylon, Mylar^{®}, polyester or Meraklon^{®}.

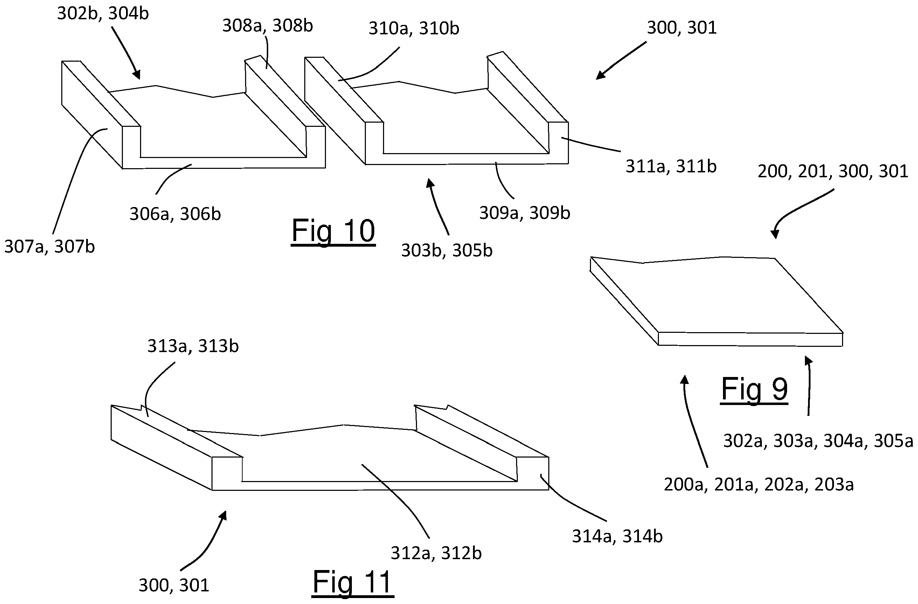

The first initial service component 200 and the second initial service component 201 are schematically represented in figure 9.

In a first embodiment, the first initial service component 200 and the second initial service component 201 are band-like elements, axially sized to each receive a pair of elongated elements, and the same as each other. In a second embodiment, the first initial service component 200 comprises a first initial service fabric 200a and a second initial service fabric 201a. In this embodiment, the second initial service component 201 comprises a third initial service fabric 202a and a fourth initial service fabric 203a. Such initial service fabrics are band-like elements, axially sized to each receive a single elongated element, and the same as each other.

The first final service component 300 and the second final service component 301 can be made in accordance with a first embodiment illustrated in figure 9, or in accordance with a second embodiment illustrated in figure 10, or in accordance with a third embodiment illustrated in figure 11.

In accordance with a first variant of the first embodiment, the first final service component 300 and the second initial service component 301 are band-like elements, axially sized to each receive a pair of elongated elements, and the same as each other. In accordance with a second variant embodiment of the first embodiment, the first final service component 300 comprises a first final service fabric 302a and a second final service fabric 303a in the form of band-like elements axially sized to each receive a single elongated element. The second final service component 301 comprises a third final service fabric 304a and a fourth final service fabric 305a in the form of band-like elements axially sized to each receive a single elongated element.

In the second embodiment illustrated in figure 10, the first final service component 300 comprises a first final service fabric 302b and a second final service fabric 303b. The second final service component 301 comprises a third final service fabric 304b and a fourth final service fabric 305b. Such final service fabrics 302b, 303b, 304b, 305b are the same as each other and therefore what is described in relation to one of such final service fabrics 302b, 303b, 304b, 305b is also valid for the others.

Each final service fabric 302b, 303b, 304b, 305b comprises a support surface 306a, 306b, 309a, 309b axially sized to receive a single elongated element. The support surface 306a, 306b, 309a, 309b is axially delimited by a first axial end shoulder 307a, 307b, 310a, 310b and by a second axial end shoulder 308a, 308b, 311a, 311b that have an extension in the radial direction that is the same as each other and greater than the extension in the radial direction of the elongated element intended to be received on the support surface 306a, 306b, 309a, 309b. When the final service fabric 302b, 303b, 304b, 305b is wound in coils, two radially adjacent coils are radially spaced apart by an amount equal to the extension in the radial direction of the first axial end shoulder 307a, 307b, 310a, 310b or of the second axial end shoulder 308a, 308b, 311a, 311b. Two radially adjacent coils therefore have portions of the first axial end shoulder 307a, 307b, 310a, 310b juxtaposed and corresponding portions of the second axial end shoulder 308a, 308b, 311a, 311b juxtaposed.

In the third embodiment illustrated in figure 11, the first final service component 300 is the same as the second final service component 301. Each final service component comprises a support surface 312a, 312b axially sized to receive a pair of elongated elements axially spaced apart. The support surface 312a, 312b is axially delimited by a first axial end shoulder 313a, 313b and by a second axial end shoulder 314a, 314b that have an extension in the radial direction that is the same as each other and greater than the extension in the radial direction of the pair of elongated elements intended to be received on the support surface 312a, 312b. When the final service component 300, 301 is wound in coils, two radially adjacent coils are radially spaced apart by an amount equal to the extension in the radial direction of the first axial end shoulder 313a, 313b or of the second axial end shoulder 314a, 314b. Two radially adjacent coils therefore have portions of the first axial end shoulder 313a, 313b juxtaposed and corresponding portions of the second axial end shoulder 314a, 314b juxtaposed.

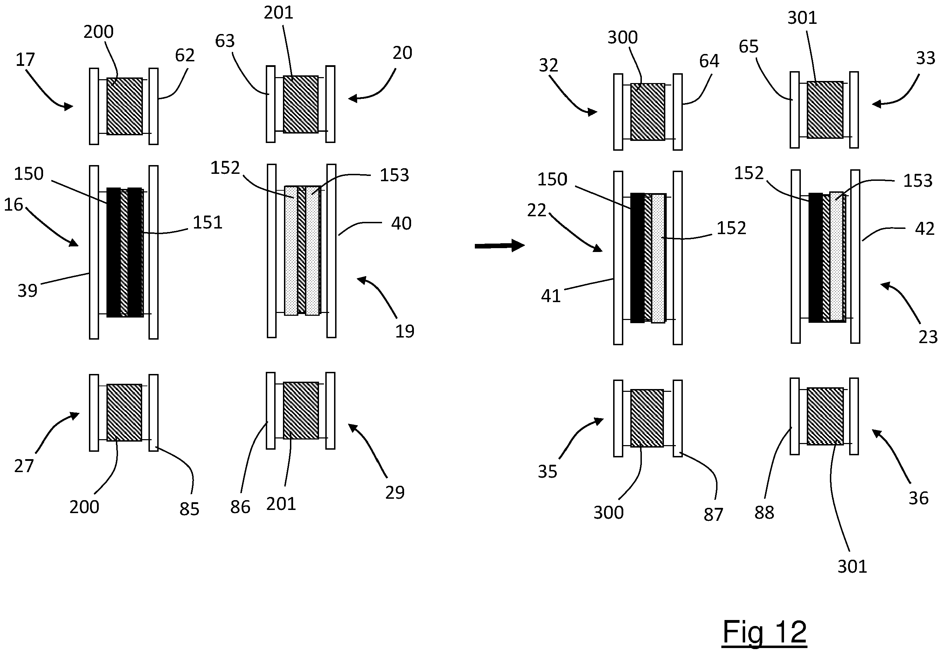

Figures 12 to 16 schematically represent some possible combinations between the various embodiments of the initial and final winding supports, of the auxiliary winding supports, of the collection winding supports and of the service components and the relative methods for arranging elongated elements in a process for building tyres for vehicle wheels.

With reference to figure 12, the first initial winding support 16 and the second initial winding support 19 are made in accordance with the embodiment of figure 5.

The first final winding support 22 and the second final winding support 23 are made in accordance with the embodiment of figure 5.

The first auxiliary winding support 17 and the second auxiliary winding support 20 are made in accordance with the embodiment of figure 7A.

The third auxiliary winding support 32 and the fourth auxiliary winding support 33 are made in accordance with the embodiment of figure 7A.

The first collection winding support 27 and the second collection winding support 29 are made in accordance with the embodiment of figure 7B.

The first initial service component 200 is made in a single service fabric and the second initial service component 201 is made in a single service fabric.

The third collection winding support 35 and the fourth collection winding support 36 are made in accordance with the embodiment of figure 7B.

The first final service component 300 is made in a single service fabric and the second final service component 301 is made in a single service fabric.

This configuration is particularly effective when the first elongated element 150 and the third elongated element 152 have the same winding diameters (and therefore also when the second elongated element 151 and the fourth elongated element 153 have the same winding diameter).

In accordance with this configuration, the first elongated element 150 and the second elongated element 151 are wound simultaneously on the storage reel 39 of the first winding support 16 in different axial positions with the first initial service component 200 coupled. The first initial service component 200 is unwound from the auxiliary storage reel 62. The third elongated element 152 and the fourth elongated element 153 are wound simultaneously on the storage reel 40 of the second winding support 19 in different axial positions with the second initial service component 201 coupled. The second initial service component 201 is unwound from the auxiliary storage reel 63.

In the transferring device 21, the first elongated element 150 and the second elongated element 151 are simultaneously unwound from the storage reel 39 and separated from the first service component 200. The first initial service component 200 is collected in the collecting storage reel 85.

Simultaneously, the third elongated element 152 and the fourth elongated element 153 are simultaneously unwound from the storage reel 40 and separated from the second initial service component 201. The second initial service component 201 is collected in the collecting storage reel 86.

As the first elongated element 150 and the third elongated element 152 are unwound from the respective storage reels, they are simultaneously wound on the storage reel 41 of the first final winding support 22 in axially separate positions and coupled with the first final service component 300. The first final service component 300 is unwound from the auxiliary storage reel 64.

Simultaneously, as the second elongated element 151 and the fourth elongated element 153 are unwound from the respective storage reels, they are simultaneously wound on the storage reel 42 of the second final winding support 23 in axially separate positions and coupled with the second final service component 301. The second final service component 301 is unwound from the auxiliary storage reel 65.

Two storage reels are thus obtained on each of which two elongated elements are wound that are different from each other and with equal winding diameters.

Thereafter, the first elongated element 150 and the third elongated element 152 are unwound from the storage reel 41 and simultaneously deposited on the forming drum 38. The first final service component 300 is simultaneously separated from the respective elongated elements and collected in the collecting storage reel 87. Alternatively or subsequently, the second elongated element 151 and the fourth elongated element 153 are unwound from the storage reel 42 and simultaneously deposited on the forming drum 38. The second final service component 301 is simultaneously separated from the respective elongated elements and collected in the collecting storage reel 88.

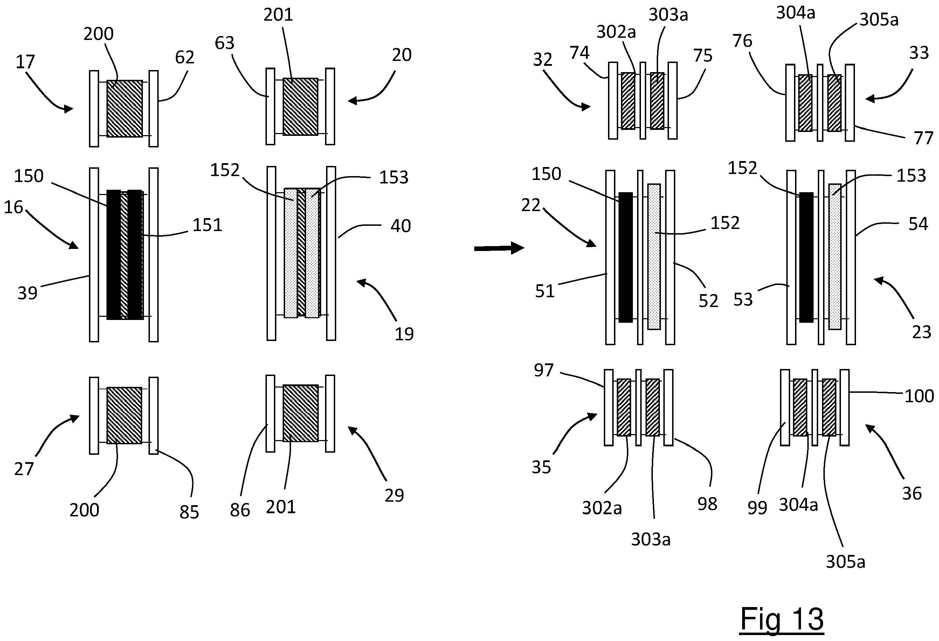

With reference to figure 13, the first initial winding support 16 and the second initial winding support 19, the first auxiliary winding support 17 and the second auxiliary winding support 20, the first collection winding support 27 and the second collection winding support 29, the first initial service component 200 and the second initial service component 201 are made in accordance with what is illustrated in figure 12 and described above.

The first final winding support 22 and the second final winding support 23 are made in accordance with the embodiment of figure 6.

The third auxiliary winding support 32 and the fourth auxiliary winding support 33 are made in accordance with the embodiment of figure 8A.

The third collection winding support 35 and the fourth collection winding support 36 are made in accordance with the embodiment of figure 8B.

The first final service component 300 and the second final service component 301 are made in accordance with the embodiment of figure 9.

This configuration is particularly effective when the first elongated element 150 and the third elongated element 152 have different winding diameters (and therefore also when the second elongated element 151 and the fourth elongated element 153 have different winding diameters).

In the transferring device 21, the first elongated element 150 and the second elongated element 151, the third elongated element 152 and the fourth elongated element 153 are subjected to the same operations described with reference to figure 12.

As the first elongated element 150 and the third elongated element 152 are unwound from the respective storage reels, they are simultaneously wound respectively on the first storage reel 51 and on the second storage reel 52 of the first final winding support 22 and coupled, respectively, with the first final service fabric 302a and with the second final service fabric 303a. The first final service fabric 302a and the second final service fabric 303a are unwound, respectively, from the first auxiliary storage reel 74 and from the second auxiliary storage reel 75.

Simultaneously, as the second elongated element 151 and the fourth elongated element 153 are unwound from the respective storage reels, they are simultaneously wound on the first storage reel 53 and on the second storage reel 54 of the second final winding support 23 and coupled, respectively, with the third final service fabric 304a and with the fourth final service fabric 305a. The third final service fabric 304a and the fourth final service fabric 305a are unwound, respectively, from the first auxiliary storage reel 76 and from the second auxiliary storage reel 77.

Two storage reels are thus obtained on each of which two elongated elements are wound that are different from each other and with different winding diameters.

Thereafter, the first elongated element 150 and the third elongated element 152 are unwound from the first storage reel 51 and from the second storage reel 52 and simultaneously deposited on the forming drum 38. The first final service fabric 302a and the second final service fabric 303a are simultaneously separated from the respective elongated elements and collected in the first collecting storage reel 97 and in the second collecting storage reel 98. Alternatively or subsequently, the second elongated element 151 and the fourth elongated element 153 are unwound from the first storage reel 53 and from the second storage reel 54 and simultaneously deposited on the forming drum 38. The third final service fabric 304a and the fourth final service fabric 305a are simultaneously separated from the respective elongated elements and collected in the first collecting storage reel 99 and in the second collecting storage reel 100.

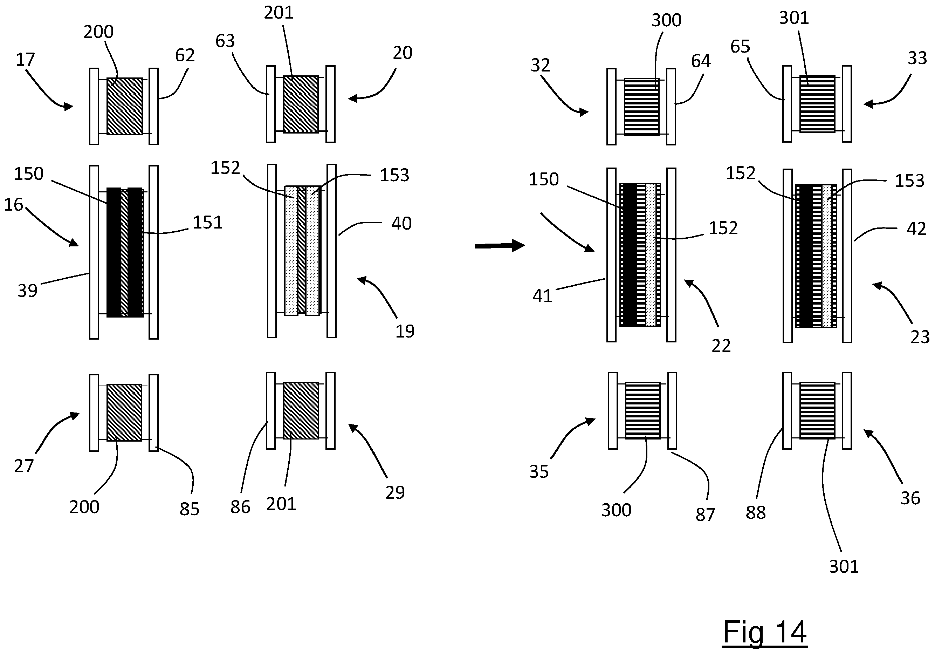

With reference to figure 14, the first initial winding support 16 and the second initial winding support 19, the first auxiliary winding support 17 and the second auxiliary winding support 20, the first collection winding support 27 and the second collection winding support 29, the first initial service component 200 and the second initial service component 201 are made in accordance with what is illustrated in figures 12 and 13 and described above.

The first final winding support 22 and the second final winding support 23, the third auxiliary winding support 32 and the fourth auxiliary winding support 33, the third collection winding support 35 and the fourth collection winding support 36 are made in accordance with what is illustrated in figure 12 and described above.

The first final service component 300 and the second final service component 301 are made in accordance with the embodiment of figure 11.

This configuration is particularly effective when the first elongated element 150 and the third elongated element 152 have different winding diameters (and therefore also when the second elongated element 151 and the fourth elongated element 153 have different winding diameters).

In the transferring device 21, the first elongated element 150 and the second elongated element 151, the third elongated element 152 and the fourth elongated element 153 are subjected to the same operations described with reference to figures 12 and 13.

As the first elongated element 150 and the third elongated element 152 are unwound from the respective storage reels, they are simultaneously wound on the storage reel 41 of the first final winding support 22 in axially separate positions and coupled with the first final service component 300. The first final service component 300 is unwound from the auxiliary storage reel 64.

Simultaneously, as the second elongated element 151 and the fourth elongated element 153 are unwound from the respective storage reels, they are simultaneously wound on the storage reel 42 of the second final winding support 23 in axially separate positions and coupled with the second final service component 301. The second final service component 301 is unwound from the auxiliary storage reel 65.

Two storage reels are thus obtained on each of which two elongated elements that are different from each other are wound and, thanks to the first final service component 300 according to the embodiment of figure 11 and to the second final service component 301 according to the embodiment of figure 11, with equal winding diameters.

Thereafter, the first elongated element 150 and the third elongated element 152 are unwound from the storage reel 41 and simultaneously deposited on the forming drum 38. The first final service component 300 is simultaneously separated from the elongated elements and collected in the collecting storage reel 87. Alternatively or subsequently, the second elongated element 151 and the fourth elongated element 153 are unwound from the storage reel 42 and simultaneously deposited on the forming drum 38. The second final service component 301 is simultaneously separated from the elongated elements and collected in the collecting storage reel 88.

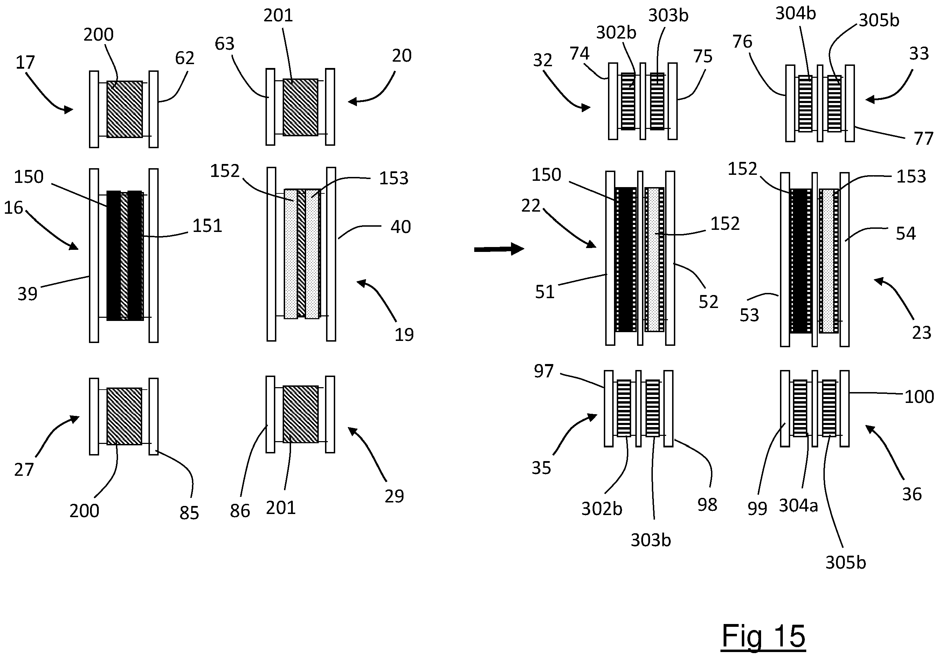

With reference to figure 15, the first initial winding support 16 and the second initial winding support 19, the first auxiliary winding support 17 and the second auxiliary winding support 20, the first collection winding support 27 and the second collection winding support 29, the first initial service component 200 and the second initial service component 201 are made in accordance with what is illustrated in figures 12, 13 and 14 and described above.

The first final winding support 22 and the second final winding support 23, the third auxiliary winding support 32 and the fourth auxiliary winding support 33, the third collection winding support 35 and the fourth collection winding support 36 are made in accordance with what is illustrated in figure 13 and described above.

In the transferring device 21, the first elongated element 150 and the second elongated element 151, the third elongated element 152 and the fourth elongated element 153 are subjected to the same operations described with reference to figures 12 and 13.

As the first elongated element 150 and the third elongated element 152 are unwound from the respective storage reels, they are simultaneously wound respectively on the first storage reel 51 and on the second storage reel 52 of the first final winding support 22 and coupled, respectively, with the first final service fabric 302b and with the second final service fabric 303b. The first final service fabric 302b and the second final service fabric 303b are unwound, respectively, from the first auxiliary storage reel 74 and from the second auxiliary storage reel 75.

Simultaneously, as the second elongated element 151 and the fourth elongated element 153 are unwound from the respective storage reels, they are simultaneously wound on the first storage reel 53 and on the second storage reel 54 of the second final winding support 23 and coupled, respectively, with the third final service fabric 304b and with the fourth final service fabric 305b. The third final service fabric 304b and the fourth final service fabric 305b are unwound, respectively, from the first auxiliary storage reel 76 and from the second auxiliary storage reel 77.

Two storage reels are thus obtained on each of which two elongated elements that are different from each other are wound and, thanks to the first final service component 300 according to the embodiment of figure 10 and to the second final service component 301 according to the embodiment of figure 10, with equal winding diameters.

Thereafter, the first elongated element 150 and the third elongated element 152 are unwound from the first storage reel 51 and from the second storage reel 52 and simultaneously deposited on the forming drum 38. The first final service fabric 302b and the second final service fabric 303b are simultaneously separated from the respective elongated elements and collected in the first collecting storage reel 97 and in the second collecting storage reel 98. Alternatively or subsequently, the second elongated element 151 and the fourth elongated element 153 are unwound from the first storage reel 53 and from the second storage reel 54 and simultaneously deposited on the forming drum 38. The third final service fabric 304b and the fourth final service fabric 305b are simultaneously separated from the respective elongated elements and collected in the first collecting storage reel 99 and in the second collecting storage reel 100.

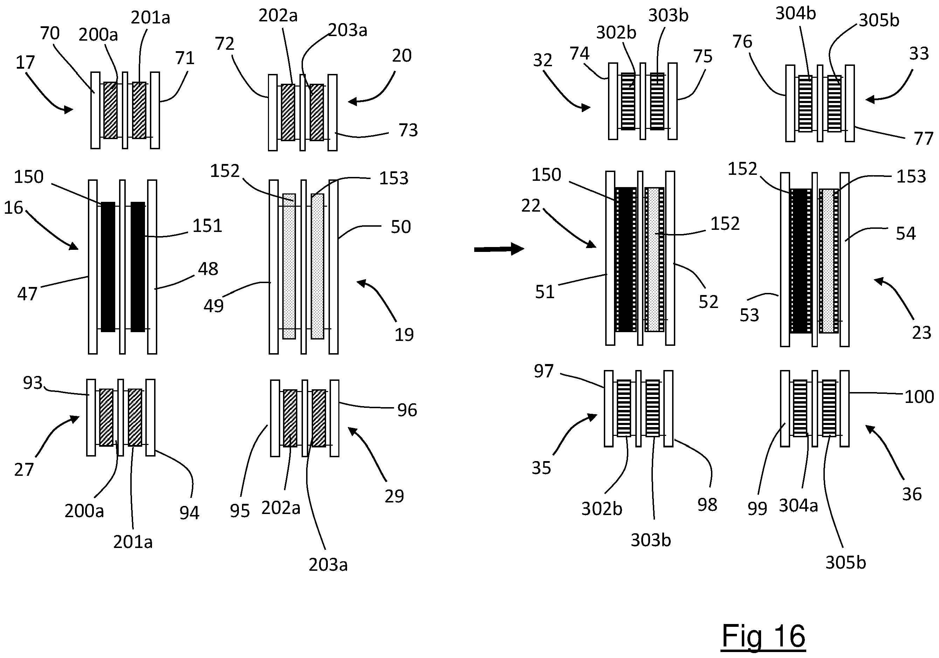

With reference to figure 16, the first initial winding support 16 and the second initial winding support 19 are made in accordance with the embodiment of figure 6.

The first auxiliary winding support 17 and the second auxiliary winding support 20 are made in accordance with the embodiment of figure 7B.

The first collection winding support 27 and the second collection winding support 29 are made in accordance with the embodiment of figure 7B.

The first initial service component 200 and the second initial service component 201 both comprise two initial service fabrics.

The first final winding support 22 and the second final winding support 23, the third auxiliary winding support 32 and the fourth auxiliary winding support 33, the third collection winding support 35 and the fourth collection winding support 36, the first final component 300 and the second final component 301 are made in accordance with what is illustrated in figure 15 and described above.

This configuration is particularly effective when the first elongated element 150 and the third elongated element 152 have different winding diameters (and therefore also when the second elongated element 151 and the fourth elongated element 153 have different winding diameters).

In accordance with this configuration, the first elongated element 150 and the second elongated element 151 are wound simultaneously on the first storage reel 47 and on the second storage reel 49 of the first winding support 16 with the first initial service fabric 200a and the second initial service fabric 201a respectively coupled. The first initial service fabric 200a and the second initial service fabric 201a are unwound, respectively, from the first auxiliary storage reel 70 and from the second auxiliary storage reel 71. The third elongated element 152 and the fourth elongated element 153 are wound simultaneously on the first storage reel 49 and on the second storage reel 50 of the second winding support 19 with the third initial service fabric 202a and the fourth initial service fabric 203a respectively coupled. The third initial service fabric 202a and the fourth initial service fabric 203a are unwound, respectively, from the first auxiliary storage reel 72 and from the second auxiliary storage reel 73.

In the transferring device 21, the first elongated element 150 and the second elongated element 151 are simultaneously unwound from the first storage reel 47 and from the second storage reel 48 and separated from the first initial service fabric 200a and from the second initial service fabric 201a. The first initial service fabric 200a and the second initial service fabric 201a are collected, respectively, in the first collecting storage reel 93 and in the second collecting storage reel 94.

Simultaneously, the third elongated element 152 and the fourth elongated element 153 are simultaneously unwound from the first storage reel 49 and from the second storage reel 50 and separated from the third initial service fabric 202a and from the fourth initial service fabric 203a. The third initial service fabric 202a and the fourth initial service fabric 203a are collected, respectively, in the first collecting storage reel 95 and in the second collecting storage reel 96.

As the first elongated element 150 and the third elongated element 152 are unwound from the respective storage reels, they are simultaneously wound respectively on the first storage reel 51 and on the second storage reel 52 of the first final winding support 22 as described in relation to figure 15.

Simultaneously, as the second elongated element 151 and the fourth elongated element 153 are unwound from the respective storage reels, they are simultaneously wound on the first storage reel 53 and on the second storage reel 54 of the second final winding support 23 as described in relation to figure 15.

The first elongated element 150 and the third elongated element 152 are thus unwound from the first storage reel 51 and from the second storage reel 52 and simultaneously deposited on the forming drum 38 as described in relation to figure 15. Alternatively or subsequently, the second elongated element 151 and the fourth elongated element 153 are unwound from the first storage reel 53 and from the second storage reel 54 and simultaneously deposited on the forming drum 38 as described in relation to figure 15.

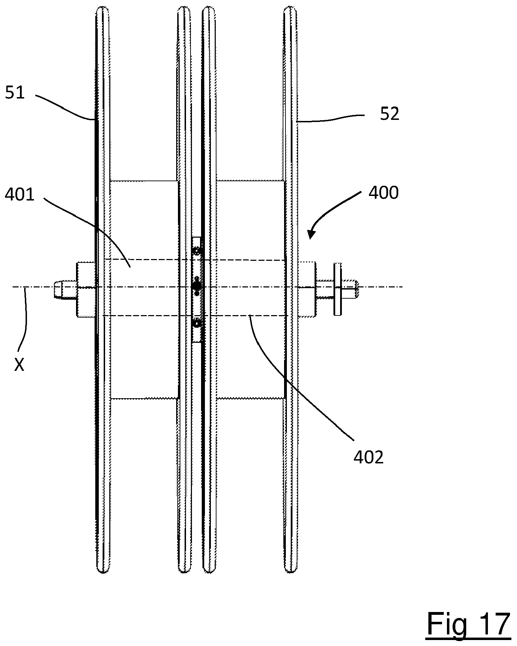

Figure 17 represents the first storage reel 51 and the second storage reel 52 of the first final winding support 22 coupled by the coupling device 400. What follows is also valid for the coupling of the two storage reels 53, 54 of the second final winding support 23. The coupling device 400 comprising a first coupling body 401 and a second coupling body 402 that are rotatable about a rotation axis X. In an unlocked condition, the first coupling body 401 is rotatable about the rotation axis X with respect to the second coupling body 402. In a locked condition, the first coupling body 401 rotates as a unit with the second coupling body 402 about the rotation axis X. The first coupling body 401 is connected to the first storage reel 51 so that the first coupling body 401 and the first storage reel 51 rotate together. The second coupling body 402 is connected to the second storage reel 52 so that the second coupling body 402 and the second storage reel 52 rotate together.

The present invention has been described with reference to some preferred embodiments thereof. Various modifications can be made to the embodiments described above, still remaining within the scope of protection of the invention, defined by the following claims.

## Claims

1. Method for arranging elongated elements to be used in a process for building tyres for vehicle wheels, comprising:
winding in parallel a first elongated element (150) and a second elongated element (151) of a first type on a first initial winding support (16), wherein the elongated elements of the first type are the same as each other;
winding in parallel a third elongated element (152) and a fourth elongated element (153) of a second type on a second initial winding support (19), wherein the elongated elements of the second type are the same as each other and are different from the elongated elements of the first type;
unwinding the first elongated element (150) from the first initial winding support (16) and winding the first elongated element on a first final winding support (22);
unwinding the second elongated element (151) from the first initial winding support (19) and winding the second elongated element on a second final winding support (23);
unwinding the third elongated element (152) from the second initial winding support (19) and winding the third elongated element on the first final winding support (22);
unwinding the fourth elongated element (153) from the second initial winding support (19) and winding the fourth elongated element on the second final winding support (23).

2. Method according to claim 1, wherein unwinding the first elongated element (150) from the first initial winding support (16) is performed at the same time as unwinding the third elongated element (152) from the second initial winding support (19) and
wherein unwinding the second elongated element (151) from the first initial winding support (16) is performed at the same time as unwinding the fourth elongated element (153) from the second initial winding support (19).

3. Method according to any one of the preceding claims, wherein winding the first elongated element (150) on the first final winding support (22) is performed at the same time as winding the third elongated element (152) on the first final winding support (22) and wherein winding the second elongated element (151) on the second final winding support (23) is performed at the same time as winding the fourth elongated element (153) on the second final winding support (23).

4. Method according to any one of the preceding claims, wherein winding in parallel the first elongated element (150) and the second elongated element (151) comprises associating a first initial service component (200) with the first elongated element (150) and with the second elongated element (151) and
wherein winding in parallel the third elongated element (152) and the fourth elongated element (153) comprises associating a second initial service component (201) with the third elongated element (152) and with the fourth elongated element (153).

5. Method according to claim 4, wherein unwinding the first elongated element (150) and the second elongated element (151) from the first initial winding support (16) comprises removing said first initial service component (200) from the first elongated element (150) and from the second elongated element (151) and collecting said first initial service component (200) on a first collection winding support (27) and
wherein unwinding the third elongated element (152) and the fourth elongated element (153) from the second initial winding support (19) comprises removing said second initial service component (200) from the third elongated element (152) and from the fourth elongated element (153) and collecting said second initial service component (200) on a second collection winding support (29).

6. Method according to any one of the preceding claims, wherein winding the first elongated element (150) on the first final winding support (22) and winding the third elongated element (152) on the first final winding support (22) comprises associating the first elongated element (150) and the third elongated element (152) with a first final service component (300) and
wherein winding the second elongated element (151) on the second final winding support (23) and winding the fourth elongated element (153) on the second final winding support (23) comprises associating the second elongated element (151) and the fourth elongated element (153) with a second final service component (301).

7. Method according to any one of the preceding claims, wherein winding in parallel the first elongated element (150) and the second elongated element (151) on the first initial winding support (16) comprises winding the first elongated element (150) in a first axial position on a storage bobbin (39) of the first initial winding support (16) and winding the second elongated element (151) in a second axial position on said storage bobbin (39) of the first initial winding support (16) and
wherein winding in parallel the third elongated element (152) and the fourth elongated element (153) on the second initial winding support (19) comprises winding the third elongated element (152) in a first axial position on a storage bobbin (40) of the second initial winding support (19) and winding the fourth elongated element (153) in a second axial position on said storage bobbin (40) of the second initial winding support (19).

8. Method according to any one of claims 1 to 6, wherein winding in parallel the first elongated element (150) and the second elongated element (151) on the first initial winding support (16) comprises winding the first elongated element (150) on a first storage bobbin (47) of the first initial winding support (16) and winding the second elongated element (151) on a second storage bobbin (48) of the first initial winding support (16) and
wherein winding in parallel the third elongated element (152) and the fourth elongated element (153) on the second initial winding support (19) comprises winding the third elongated element (152) on a first storage bobbin (49) of the second initial winding support (19) and winding the fourth elongated element (153) on a second storage bobbin (50) of the second initial winding support (19).

9. Method according to claim 6, wherein associating the first elongated element (150) and the third elongated element (152) with a first final service component (300) comprises associating a first final service fabric (302a, 302b) with the first elongated element (150) and a second final service fabric (303a, 303b) with the third elongated element (152) and
wherein associating the second elongated element (151) and the fourth elongated element (153) with a second final service component (301) comprises associating a third final service fabric (304a, 304b) with the second elongated element (151) and a fourth final service fabric (305a, 305b) with the fourth elongated element (153).

10. Method according to any one of the preceding claims, wherein winding the first elongated element (150) on the first final winding support (22) and winding the third elongated element (152) on the first final winding support (22) comprises winding the first elongated element (150) in a first axial position on a storage bobbin (41) of the first final winding support (22) and winding the third elongated element (152) in a second axial position on said storage bobbin (41) of the first final winding support (22) and
wherein winding in parallel the second elongated element (151) and the fourth elongated element (153) on the second final winding support (23) comprises winding the second elongated element (151) in a first axial position on a storage bobbin (42) of the second final winding support (23) and winding the fourth elongated element (153) in a second axial position on said storage bobbin (42) of the second final winding support (23).

11. Method according to any one of claims 1 to 9, wherein winding the first elongated element (150) on the first final winding support (22) comprises winding the first elongated element (150) on a first storage bobbin (51) of the first final winding support (22) and wherein winding the third elongated element (152) on the first final winding support (22) comprises winding the third elongated element (152) on a second storage bobbin (52) of the first final winding support (22) and
wherein winding the second elongated element (151) on the second final winding support (23) comprises winding the second elongated element (151) on a first storage bobbin (53) of the second final winding support (23) and wherein winding the fourth elongated element (153) on the second final winding support (23) comprises winding the fourth elongated element (153) on a second storage bobbin (54) of the second final winding support (23).

12. Method according to claim 11, comprising arranging the first storage bobbin (51) of the first final winding support (22) on a first coupling body (401) of a coupling device (400) and the second storage bobbin (52) of the first final winding support (22) on a second coupling body (402) of said coupling device (400), wherein said first coupling body (401) and said second coupling body (402) are rotatable with respect to one another about a rotation axis (X) and comprising arranging the first storage bobbin (53) of the second final winding support (23) on a first coupling body (401) of a coupling device (400) and the second storage bobbin (54) of the second final winding support (23) on a second coupling body (402) of said coupling device (400), wherein said first coupling body (401) and said second coupling body (402) are rotatable with respect to one another about a rotation axis (X).

13. Process for building tyres for vehicle wheels comprising:
applying the method for arranging elongated elements according to any one of the preceding claims;
arranging the first final winding support (22) or the second final winding support (23) in a building line (37) close to a forming drum (38);
simultaneously unwinding said first elongated element (150) and said third elongated element (152) from said first final winding support (22) or said second elongated element (151) and said fourth elongated element (153) from said second final winding support (23) and simultaneously laying down said first elongated element (150) and said third elongated element (152) or said second elongated element (151) and said fourth elongated element (153) on the forming drum (38).

14. Plant (10) for building tyres for vehicle wheels comprising:
an initial winding station (14) configured to wind a first elongated element (150) and a second elongated element (151) of a first type, which are the same as one another, on a first initial winding support (16) and a third elongated element (152) and a fourth elongated element (153) of a second type on a second initial winding support (19), wherein the elongated elements of the second type are the same as each other and are different from the elongated elements of the first type;
a transferring device (21) operating on the first initial winding support (16) and on the second initial winding support (19), and configured to transfer said first elongated element (150) and said third elongated element (152) to a first final winding support (22) and to transfer said second elongated element (151) and said fourth elongated element (153) to a second final winding support (23);
a final unwinding station (34) configured to simultaneously unwind said first elongated element (150) and said third elongated element (152) from said first final winding support (22) or said second elongated element (151) and said fourth elongated element (153) from said second final winding support (23);
a building line (37) comprising at least one forming drum (38) operatively associated with the final unwinding station (34) to simultaneously receive said first elongated element (150) and said third elongated element (152) of the first type or said second elongated element (151) and said fourth elongated element (153) of the second type.

15. Plant (10) according to claim 14, comprising an extrusion line (11) comprising at least one extruding device (12) configured to extrude a first elongated element (150) and a second elongated element (151) of a first type or a third elongated element (152) and a fourth elongated element (153) of a second type and
wherein said initial winding station (14) is operatively associated with the extrusion line (11).

## Patentansprüche

1. Verfahren zum Anordnen länglicher Elemente zur Verwendung in einem Prozess zur Herstellung von Reifen für Fahrzeugräder, umfassend:
paralleles Wickeln eines ersten länglichen Elements (150) und eines zweiten länglichen Elements (151) eines ersten Typs auf einen Anfangswicklungsträger (16), wobei die länglichen Elemente des ersten Typs einander gleich sind;
paralleles Wickeln eines dritten länglichen Elements (152) und eines vierten länglichen Elements (153) eines zweiten Typs auf einen zweiten Anfangswicklungsträger (19), wobei die länglichen Elemente des zweiten Typs einander gleich sind und sich von den länglichen Elementen des ersten Typs unterscheiden;
Abwickeln des ersten länglichen Elements (150) von dem ersten Anfangswicklungsträger (16) und Wickeln des ersten länglichen Elements auf einen ersten Endwicklungsträger (22);
Abwickeln des zweiten länglichen Elements (151) von dem ersten Anfangswicklungsträger (19) und Wickeln des zweiten länglichen Elements auf einen zweiten Endwicklungsträger (23);
Abwickeln des dritten länglichen Elements (152) von dem zweiten Anfangswicklungsträger (19) und Wickeln des dritten länglichen Elements auf den ersten Endwicklungsträger (22);
Abwickeln des vierten länglichen Elements (153) von dem zweiten Anfangswicklungsträger (19) und Wickeln des vierten länglichen Elements auf den zweiten Endwicklungsträger (23).

2. Verfahren nach Anspruch 1, wobei das Abwickeln des ersten länglichen Elements (150) von dem ersten Anfangswicklungsträger (16) gleichzeitig mit dem Abwickeln des dritten länglichen Elements (152) von dem zweiten Anfangswicklungsträger (19) durchgeführt wird und
wobei das Abwickeln des zweiten länglichen Elements (151) von dem ersten Anfangswicklungsträger (16) gleichzeitig mit dem Abwickeln des vierten länglichen Elements (153) von dem zweiten Anfangswicklungsträger (19) durchgeführt wird.

3. Verfahren nach einem der vorstehenden Ansprüche, wobei das Wickeln des ersten länglichen Elements (150) auf den ersten Endwicklungsträger (22) gleichzeitig mit dem Wickeln des dritten länglichen Elements (152) auf den ersten Endwicklungsträger (22) durchgeführt wird und wobei das Wickeln des zweiten länglichen Elements (151) auf den zweiten Endwicklungsträger (23) gleichzeitig mit dem Wickeln des vierten länglichen Elements (153) auf den zweiten Endwicklungsträger (23) durchgeführt wird.

4. Verfahren nach einem der vorstehenden Ansprüche, wobei das parallele Wickeln des ersten länglichen Elements (150) und des zweiten länglichen Elements (151) das Zuordnen einer ersten Anfangsdienstkomponente (200) zu dem ersten länglichen Element (150) und zu dem zweiten länglichen Element (151) umfasst und
wobei das parallele Wickeln des dritten länglichen Elements (152) und des vierten länglichen Elements (153) das Zuordnen einer zweiten Anfangsdienstkomponente (201) zu dem dritten länglichen Element (152) und zu dem vierten länglichen Element (153) umfasst.

5. Verfahren nach Anspruch 4, wobei das Abwickeln des ersten länglichen Elements (150) und des zweiten länglichen Elements (151) von dem ersten Anfangswicklungsträger (16) das Entfernen der ersten Anfangsdienstkomponente (200) von dem ersten länglichen Element (150) und von dem zweiten länglichen Element (151) und das Sammeln der ersten Anfangsdienstkomponente (200) auf einem ersten Sammelwicklungsträger (27) umfasst und
wobei das Abwickeln des dritten länglichen Elements (152) und des vierten länglichen Elements (153) von dem zweiten Anfangswicklungsträger (19) das Entfernen der zweiten Anfangsdienstkomponente (200) von dem dritten länglichen Element (152) und von dem vierten länglichen Element (153) und das Sammeln der zweiten Anfangsdienstkomponente (200) auf einem zweiten Sammelwicklungsträger (29) umfasst.

6. Verfahren nach einem der vorstehenden Ansprüche, wobei das Wickeln des ersten länglichen Elements (150) auf den ersten Endwicklungsträger (22) und das Wickeln des dritten länglichen Elements (152) auf den ersten Endwicklungsträger (22) das Zuordnen des ersten länglichen Elements (150) und des dritten länglichen Elements (152) zu einer ersten Enddienstkomponente (300) umfasst und
wobei das Wickeln des zweiten länglichen Elements (151) auf den zweiten Endwicklungsträger (23) und das Wickeln des vierten länglichen Elements (153) auf den zweiten Endwicklungsträger (23) das Zuordnen des zweiten länglichen Elements (151) und des vierten länglichen Elements (153) zu einer zweiten Enddienstkomponente (301) umfasst.

7. Verfahren nach einem der vorstehenden Ansprüche, wobei das parallele Wickeln des ersten länglichen Elements (150) und des zweiten länglichen Elements (151) auf den ersten Anfangswicklungsträger (16) das Wickeln des ersten länglichen Elements (150) in einer ersten axialen Position auf eine Speicherspule (39) des ersten Anfangswicklungsträgers (16) und das Wickeln des zweiten länglichen Elements (151) in einer zweiten axialen Position auf die Speicherspule (39) des ersten Anfangswicklungsträgers (16) umfasst und
wobei das parallele Wickeln des dritten länglichen Elements (152) und des vierten länglichen Elements (153) auf den zweiten Anfangswicklungsträger (19) das Wickeln des dritten länglichen Elements (152) in einer ersten axialen Position auf eine Speicherspule (40) des zweiten Anfangswicklungsträgers (19) und das Wickeln des vierten länglichen Elements (153) in einer zweiten axialen Position auf die Speicherspule (40) des zweiten Anfangswicklungsträgers (19) umfasst.

8. Verfahren nach einem der Ansprüche 1 bis 6, wobei das parallele Wickeln des ersten länglichen Elements (150) und des zweiten länglichen Elements (151) auf den ersten Anfangswicklungsträger (16) das Wickeln des ersten länglichen Elements (150) auf eine erste Speicherspule (47) des ersten Anfangswicklungsträgers (16) und das Wickeln des zweiten länglichen Elements (151) auf eine zweite Speicherspule (48) des ersten Anfangswicklungsträgers (16) umfasst und
wobei das parallele Wickeln des dritten länglichen Elements (152) und des vierten länglichen Elements (153) auf den zweiten Anfangswicklungsträger (19) das Wickeln des dritten länglichen Elements (152) auf eine erste Speicherspule (49) des zweiten Anfangswicklungsträgers (19) und das Wickeln des vierten länglichen Elements (153) auf eine zweite Speicherspule (50) des zweiten Anfangswicklungsträgers (19) umfasst.

9. Verfahren nach Anspruch 6, wobei das Zuordnen des ersten länglichen Elements (150) und des dritten länglichen Elements (152) zu einer ersten Enddienstkomponente (300) das Zuordnen eines ersten Enddienstgewebes (302a, 302b) zu dem ersten länglichen Element (150) und eines zweiten Enddienstgewebes (303a, 303b) zu dem dritten länglichen Element (152) umfasst und
wobei das Zuordnen des zweiten länglichen Elements (151) und des vierten länglichen Elements (153) zu einer zweiten Enddienstkomponente (301) das Zuordnen eines dritten Enddienstgewebes (304a, 304b) zu dem zweiten länglichen Element (151) und eines vierten Enddienstgewebes (305a, 305b) zu dem vierten länglichen Element (153) umfasst.

10. Verfahren nach einem der vorstehenden Ansprüche, wobei das Wickeln des ersten länglichen Elements (150) auf den ersten Endwicklungsträger (22) und das Wickeln des dritten länglichen Elements (152) auf den ersten Endwicklungsträger (22) das Wickeln des ersten länglichen Elements (150) in einer ersten axialen Position auf eine Speicherspule (41) des ersten Endwicklungsträgers (22) und das Wickeln des dritten länglichen Elements (152) in einer zweiten axialen Position auf die Speicherspule (41) des ersten Endwicklungsträgers (22) umfasst und
wobei das parallele Wickeln des zweiten länglichen Elements (151) und des vierten länglichen Elements (153) auf den zweiten Endwicklungsträger (23) das Wickeln des zweiten länglichen Elements (151) in einer ersten axialen Position auf eine Speicherspule (42) des zweiten Endwicklungsträgers (23) und das Wickeln des vierten länglichen Elements (153) in einer zweiten axialen Position auf die Speicherspule (42) des zweiten Endwicklungsträgers (23) umfasst.

11. Verfahren nach einem der Ansprüche 1 bis 9, wobei das Wickeln des ersten länglichen Elements (150) auf den ersten Endwicklungsträger (22) das Wickeln des ersten länglichen Elements (150) auf eine erste Speicherspule (51) des ersten Endwicklungsträgers (22) umfasst und wobei das Wickeln des dritten länglichen Elements (152) auf den ersten Endwicklungsträger (22) das Wickeln des dritten länglichen Elements (152) auf eine zweite Speicherspule (52) des ersten Endwicklungsträgers (22) umfasst und
wobei das Wickeln des zweiten länglichen Elements (151) auf den zweiten Endwicklungsträger (23) das Wickeln des zweiten länglichen Elements (151) auf eine erste Speicherspule (53) des zweiten Endwicklungsträgers (23) umfasst und wobei das Wickeln des vierten länglichen Elements (153) auf den zweiten Endwicklungsträger (23) das Wickeln des vierten länglichen Elements (153) auf eine zweite Speicherspule (54) des zweiten Endwicklungsträgers (23) umfasst.

12. Verfahren nach Anspruch 11, umfassend das Anordnen der ersten Speicherspule (51) des ersten Endwicklungsträgers (22) auf einem ersten Kupplungskörper (401) einer Kupplungsvorrichtung (400) und der zweiten Speicherspule (52) des ersten Endwicklungsträgers (22) auf einem zweiten Kupplungskörper (402) der Kupplungsvorrichtung (400), wobei der erste Kupplungskörper (401) und der zweite Kupplungskörper (402) relativ zueinander um eine Drehachse (X) drehbar sind, und umfassend das Anordnen der ersten Speicherspule (53) des zweiten Endwicklungsträgers (23) auf einem ersten Kupplungskörper (401) einer Kupplungsvorrichtung (400) und der zweiten Speicherspule (54) des zweiten Endwicklungsträgers (23) auf einem zweiten Kupplungskörper (402) der Kupplungsvorrichtung (400), wobei der erste Kupplungskörper (401) und der zweite Kupplungskörper (402) relativ zueinander um eine Drehachse (X) drehbar sind.

13. Prozess zur Herstellung von Reifen für Fahrzeugräder, umfassend:
Anwenden des Verfahrens zum Anordnen länglicher Elemente nach einem der vorstehenden Ansprüche;
Anordnen des ersten Endwicklungsträgers (22) oder des zweiten Endwicklungsträgers (23) in einer Herstellungslinie (37) nahe einer Formtrommel (38);
gleichzeitiges Abwickeln des ersten länglichen Elements (150) und des dritten länglichen Elements (152) von dem ersten Endwicklungsträger (22) oder des zweiten länglichen Elements (151) und des vierten länglichen Elements (153) von dem zweiten Endwicklungsträger (23) und gleichzeitiges Ablegen des ersten länglichen Elements (150) und des dritten länglichen Elements (152) oder des zweiten länglichen Elements (151) und des vierten länglichen Elements (153) auf der Formtrommel (38).

14. Anlage (10) zur Herstellung von Reifen für Fahrzeugräder, umfassend:
eine Anfangswickelstation (14), die dazu konfiguriert ist, ein erstes längliches Element (150) und ein zweites längliches Element (151) eines ersten Typs, die einander gleich sind, auf einen ersten Anfangswicklungsträger (16) und ein drittes längliches Element (152) und ein viertes längliches Element (153) eines zweiten Typs auf einen zweiten Anfangswicklungsträger (19) zu wickeln, wobei die länglichen Elemente des zweiten Typs einander gleich sind und sich von den länglichen Elementen des ersten Typs unterscheiden;
eine Übertragungsvorrichtung (21), die auf den ersten Anfangswicklungsträger (16) und auf den zweiten Anfangswicklungsträger (19) einwirkt und dazu konfiguriert ist, das erste längliche Element (150) und das dritte längliche Element (152) auf einen ersten Endwicklungsträger (22) zu übertragen und das zweite längliche Element (151) und das vierte längliche Element (153) auf einen zweiten Endwicklungsträger (23) zu übertragen;
eine Endabwickelstation (34), die dazu konfiguriert ist, das erste längliche Element (150) und das dritte längliche Element (152) gleichzeitig von dem ersten Endwicklungsträger (22) abzuwickeln oder das zweite längliche Element (151) und das vierte längliche Element (153) gleichzeitig von dem zweiten Endwicklungsträger (23) abzuwickeln;
eine Herstellungslinie (37), die mindestens eine Formtrommel (38) umfasst, die betriebsfähig der Endabwickelstation (34) zugeordnet ist, um gleichzeitig das erste längliche Element (150) und das dritte längliche Element (152) des ersten Typs oder das zweite längliche Element (151) und das vierte längliche Element (153) des zweiten Typs aufzunehmen.

15. Anlage (10) nach Anspruch 14, umfassend eine Extrusionslinie (11), die mindestens eine Extrusionsvorrichtung (12) umfasst, die dazu konfiguriert ist, ein erstes längliches Element (150) und ein zweites längliches Element (151) eines ersten Typs oder ein drittes längliches Element (152) und ein viertes längliches Element (153) eines zweiten Typs zu extrudieren, und
wobei die Anfangswickelstation (14) betriebsfähig der Extrusionslinie (11) zugeordnet ist.

## Revendications

1. Procédé d'agencement d'éléments allongés destinés à être utilisés dans un processus de fabrication de pneus pour roues de véhicule, comprenant les étapes consistant à :
enrouler en parallèle un premier élément allongé (150) et un deuxième élément allongé (151) d'un premier type sur un premier support d'enroulement initial (16), dans lequel les éléments allongés du premier type sont identiques l'un à l'autre ;
enrouler en parallèle un troisième élément allongé (152) et un quatrième élément allongé (153) d'un second type sur un second support d'enroulement initial (19), dans lequel les éléments allongés du second type sont identiques l'un à l'autre et différents des éléments allongés du premier type ;
dérouler le premier élément allongé (150) du premier support d'enroulement initial (16) et enrouler le premier élément allongé sur un premier support d'enroulement final (22) ;
dérouler le deuxième élément allongé (151) du premier support d'enroulement initial (19) et enrouler le deuxième élément allongé sur un second support d'enroulement final (23) ;
dérouler le troisième élément allongé (152) du second support d'enroulement initial (19) et enrouler le troisième élément allongé sur le premier support d'enroulement final (22) ;
dérouler le quatrième élément allongé (153) du second support d'enroulement initial (19) et enrouler le quatrième élément allongé sur le second support d'enroulement final (23).

2. Procédé selon la revendication 1, dans lequel le déroulement du premier élément allongé (150) du premier support d'enroulement initial (16) est effectué en même temps que le déroulement du troisième élément allongé (152) du second support d'enroulement initial (19) et
dans lequel le déroulement du deuxième élément allongé (151) du premier support d'enroulement initial (16) est effectué en même temps que le déroulement du quatrième élément allongé (153) du second support d'enroulement initial (19).

3. Procédé selon l'une quelconque des revendications précédentes, dans lequel l'enroulement du premier élément allongé (150) sur le premier support d'enroulement final (22) est effectué en même temps que l'enroulement du troisième élément allongé (152) sur le premier support d'enroulement final (22) et dans lequel l'enroulement du deuxième élément allongé (151) sur le second support d'enroulement final (23) est effectué en même temps que l'enroulement du quatrième élément allongé (153) sur le second support d'enroulement final (23).

4. Procédé selon l'une quelconque des revendications précédentes, dans lequel l'enroulement en parallèle du premier élément allongé (150) et du deuxième élément allongé (151) comprend l'association d'un premier composant de service initial (200) au premier élément allongé (150) et au deuxième élément allongé (151) et
dans lequel l'enroulement en parallèle du troisième élément allongé (152) et du quatrième élément allongé (153) comprend l'association d'un second composant de service initial (201) au troisième élément allongé (152) et au quatrième élément allongé (153).

5. Procédé selon la revendication 4, dans lequel le déroulement du premier élément allongé (150) et du deuxième élément allongé (151) du premier support d'enroulement initial (16) comprend le retrait dudit premier composant de service initial (200) du premier élément allongé (150) et du deuxième élément allongé (151) et la collecte dudit premier composant de service initial (200) sur un premier support d'enroulement de collecte (27) et
dans lequel le déroulement du troisième élément allongé (152) et du quatrième élément allongé (153) du second support d'enroulement initial (19) comprend le retrait dudit second composant de service initial (200) du troisième élément allongé (152) et du quatrième élément allongé (153) et la collecte dudit second composant de service initial (200) sur un second support d'enroulement de collecte (29).

6. Procédé selon l'une quelconque des revendications précédentes, dans lequel l'enroulement du premier élément allongé (150) sur le premier support d'enroulement final (22) et l'enroulement du troisième élément allongé (152) sur le premier support d'enroulement final (22) comprennent l'association du premier élément allongé (150) et du troisième élément allongé (152) avec un premier composant de service final (300) et
dans lequel l'enroulement du deuxième élément allongé (151) sur le second support d'enroulement final (23) et l'enroulement du quatrième élément allongé (153) sur le second support d'enroulement final (23) comprennent l'association du deuxième élément allongé (151) et du quatrième élément allongé (153) avec un second composant de service final (301).

7. Procédé selon l'une quelconque des revendications précédentes, dans lequel l'enroulement en parallèle du premier élément allongé (150) et du deuxième élément allongé (151) sur le premier support d'enroulement initial (16) comprend l'enroulement du premier élément allongé (150) dans une première position axiale sur une bobine de stockage (39) du premier support d'enroulement initial (16) et l'enroulement du deuxième élément allongé (151) dans une seconde position axiale sur ladite bobine de stockage (39) du premier support d'enroulement initial (16) et
dans lequel l'enroulement en parallèle du troisième élément allongé (152) et du quatrième élément allongé (153) sur le second support d'enroulement initial (19) comprend l'enroulement du troisième élément allongé (152) dans une première position axiale sur une bobine de stockage (40) du second support d'enroulement initial (19) et l'enroulement du quatrième élément allongé (153) dans une seconde position axiale sur ladite bobine de stockage (40) du second support d'enroulement initial (19).

8. Procédé selon l'une quelconque des revendications 1 à 6, dans lequel l'enroulement en parallèle du premier élément allongé (150) et du deuxième élément allongé (151) sur le premier support d'enroulement initial (16) comprend l'enroulement du premier élément allongé (150) sur une première bobine de stockage (47) du premier support d'enroulement initial (16) et l'enroulement du deuxième élément allongé (151) sur une seconde bobine de stockage (48) du premier support d'enroulement initial (16) et
dans lequel l'enroulement en parallèle du troisième élément allongé (152) et du quatrième élément allongé (153) sur le second support d'enroulement initial (19) comprend l'enroulement du troisième élément allongé (152) sur une première bobine de stockage (49) du second support d'enroulement initial (19) et l'enroulement du quatrième élément allongé (153) sur une seconde bobine de stockage (50) du second support d'enroulement initial (19).

9. Procédé selon la revendication 6, dans lequel l'association du premier élément allongé (150) et du troisième élément allongé (152) à un premier composant de service final (300) comprend l'association d'un premier tissu de service final (302a, 302b) au premier élément allongé (150) et d'un deuxième tissu de service final (303a, 303b) au troisième élément allongé (152) et
dans lequel l'association du deuxième élément allongé (151) et du quatrième élément allongé (153) avec un second composant de service final (301) comprend l'association d'un troisième tissu de service final (304a, 304b) au deuxième élément allongé (151) et d'un quatrième tissu de service final (305a, 305b) au quatrième élément allongé (153).

10. Procédé selon l'une quelconque des revendications précédentes, dans lequel l'enroulement du premier élément allongé (150) sur le premier support d'enroulement final (22) et l'enroulement du troisième élément allongé (152) sur le premier support d'enroulement final (22) comprennent l'enroulement du premier élément allongé (150) dans une première position axiale sur une bobine de stockage (41) du premier support d'enroulement final (22) et l'enroulement du troisième élément allongé (152) dans une seconde position axiale sur ladite bobine de stockage (41) du premier support d'enroulement final (22) et
dans lequel l'enroulement en parallèle du deuxième élément allongé (151) et du quatrième élément allongé (153) sur le second support d'enroulement final (23) comprend l'enroulement du deuxième élément allongé (151) dans une première position axiale sur une bobine de stockage (42) du second support d'enroulement final (23) et l'enroulement du quatrième élément allongé (153) dans une seconde position axiale sur ladite bobine de stockage (42) du second support d'enroulement final (23).

11. Procédé selon l'une quelconque des revendications 1 à 9, dans lequel l'enroulement du premier élément allongé (150) sur le premier support d'enroulement final (22) comprend l'enroulement du premier élément allongé (150) sur une première bobine de stockage (51) du premier support d'enroulement final (22) et dans lequel l'enroulement du troisième élément allongé (152) sur le premier support d'enroulement final (22) comprend l'enroulement du troisième élément allongé (152) sur une seconde bobine de stockage (52) du premier support d'enroulement final (22) et
dans lequel l'enroulement du deuxième élément allongé (151) sur le second support d'enroulement final (23) comprend l'enroulement du deuxième élément allongé (151) sur une première bobine de stockage (53) du second support d'enroulement final (23) et dans lequel l'enroulement du quatrième élément allongé (153) sur le second support d'enroulement final (23) comprend l'enroulement du quatrième élément allongé (153) sur une seconde bobine de stockage (54) du second support d'enroulement final (23).

12. Procédé selon la revendication 11, comprenant l'agencement de la première bobine de stockage (51) du premier support d'enroulement final (22) surun premier corps de couplage (401) d'un dispositif de couplage (400) et de la seconde bobine de stockage (52) du premier support d'enroulement final (22) sur un second corps de couplage (402) dudit dispositif de couplage (400), dans lequel ledit premier corps de couplage (401) et ledit second corps de couplage (402) sont rotatifs l'un par rapport à l'autre autour d'un axe de rotation (X) et comprenant l'agencement de la première bobine de stockage (53) du second support d'enroulement final (23) sur un premier corps de couplage (401) d'un dispositif de couplage (400) et de la seconde bobine de stockage (54) du second support d'enroulement final (23) sur un second corps de couplage (402) dudit dispositif de couplage (400), dans lequel ledit premier corps de couplage (401) et ledit second corps de couplage (402) sont rotatifs l'un par rapport à l'autre autour d'un axe de rotation (X).

13. Processus de fabrication de pneus pour roues de véhicule comprenant les étapes consistant à :
appliquer le procédé d'agencement d'éléments allongés selon l'une quelconque des revendications précédentes ;
agencer le premier support d'enroulement final (22) ou le second support d'enroulement final (23) dans une ligne de construction (37) à proximité d'un tambour de formation (38) ;
dérouler simultanément ledit premier élément allongé (150) et ledit troisième élément allongé (152) dudit premier support d'enroulement final (22) ou ledit deuxième élément allongé (151) et ledit quatrième élément allongé (153) dudit second support d'enroulement final (23) et déposer simultanément ledit premier élément allongé (150) et ledit troisième élément allongé (152) ou ledit deuxième élément allongé (151) et ledit quatrième élément allongé (153) sur le tambour de formation (38).

14. Installation (10) de fabrication de pneus pour roues de véhicule comprenant :
une station d'enroulement initiale (14) configurée pour enrouler un premier élément allongé (150) et un deuxième élément allongé (151) d'un premier type, qui sont identiques l'un à l'autre, sur un premier support d'enroulement initial (16) et un troisième élément allongé (152) et un quatrième élément allongé (153) d'un second type sur un second support d'enroulement initial (19), dans laquelle les éléments allongés du second type sont identiques l'un à l'autre et différents des éléments allongés du premier type ;
un dispositif de transfert (21) fonctionnant sur le premier support d'enroulement initial (16) et sur le second support d'enroulement initial (19), et configuré pour transférer ledit premier élément allongé (150) et ledit troisième élément allongé (152) vers un premier support d'enroulement final (22) et pour transférer ledit deuxième élément allongé (151) et ledit quatrième élément allongé (153) vers un second support d'enroulement final (23) ;
une station de déroulement final (34) configurée pour dérouler simultanément ledit premier élément allongé (150) et ledit troisième élément allongé (152) dudit premier support d'enroulement final (22) ou ledit deuxième élément allongé (151) et ledit quatrième élément allongé (153) dudit second support d'enroulement final (23) ;
une ligne de construction (37) comprenant au moins un tambour de formation (38) associé de manière fonctionnelle à la station de déroulement final (34) pour recevoir simultanément ledit premier élément allongé (150) et ledit troisième élément allongé (152) du premier type ou ledit deuxième élément allongé (151) et ledit quatrième élément allongé (153) du second type.

15. Installation (10) selon la revendication 14, comprenant une ligne d'extrusion (11) comprenant au moins un dispositif d'extrusion (12) configuré pour extruder un premier élément allongé (150) et un deuxième élément allongé (151) d'un premier type ou un troisième élément allongé (152) et un quatrième élément allongé (153) d'un second type et
dans laquelle ladite station d'enroulement initiale (14) est associée de manière fonctionnelle à la ligne d'extrusion (11).
